# EUROPÄISCHE PATENTSCHRIFT

(11) **EP 4 568 085 B1**
(45) Veröffentlichungstag und Bekanntmachung des Hinweises auf die Patenterteilung: **02.09.2026**
(21) Anmeldenummer: 23214073.1
(22) Anmeldetag: 04.12.2023
(51) Int. Cl.: H02K 35/06, H02K 7/18

(54) **SYSTEM ZUR ERZEUGUNG ELEKTRISCHER ENERGIE IN EINER LINEARBEWEGUNGSVORRICHTUNG**
SYSTEM FOR GENERATING ELECTRICAL ENERGY IN A LINEAR MOVEMENT DEVICE
SYSTÈME DE PRODUCTION D'ÉNERGIE ÉLECTRIQUE DANS UN DISPOSITIF À MOUVEMENT LINÉAIRE

(43) Veröffentlichungstag der Anmeldung: 11.06.2025
(73) Patentinhaber: Schneeberger Holding AG, 4914 Roggwil (CH)
(72) Erfinder: HAEFNER, Peter, 75305 Neuenbürg (DE); GÖTZ, Klaus-Dieter, 74372 Sersheim (DE); WIECZOREK, Johannes, 91058 Erlangen (DE)
(74) Vertreter: EGLI-EUROPEAN PATENT ATTORNEYS

(56) Entgegenhaltungen:
- EP-B1- 1 134 444
- CN-A- 101 898 517
- DE-A1- 102017 212 448
- US-B2- 7 126 233

## Beschreibung

### Technisches Gebiet

Die vorliegende Erfindung betrifft ein System zur Erzeugung elektrischer Energie in einer Linearbewegungsvorrichtung, welche eine erste Vorrichtungskomponente und eine zweite Vorrichtungskomponente aufweist, wobei die zweite Vorrichtungskomponente über Wälzkörper an der ersten Vorrichtungskomponente gestützt ist, sodass die zweite Vorrichtungskomponente relativ zur ersten Vorrichtungskomponente linear bewegbar ist. Weiterhin bezieht sich die vorliegende Erfindung auch auf eine mit einem solchen System ausgestattete Linearbewegungsvorrichtung, wie beispielsweise eine Profilschienenführung mit Wälzkörpern, die zwischen einer ersten Vorrichtungskomponente einer relativ zur ersten Vorrichtungskomponente beweglichen zweiten Vorrichtungskomponente angeordnet sind.

### Stand der Technik

Eine Linearbewegungsvorrichtung ist ein mechanisches System, konstruiert, um lineare Bewegungen mit minimierter Reibung und hoher Präzision zu realisieren. Diese Vorrichtung kombiniert eine (beispielsweise feststehende) erste Vorrichtungskomponente mit einer relativ zur ersten Vorrichtungskomponente beweglichen zweiten Vorrichtungskomponente, wobei die spezifischen Eigenschaften und Ausprägungen dieser beiden Komponenten variabel sind.

Bei einer Ausführungsform einer Linearbewegungsvorrichtung, die als Profilschienenführung konzipiert ist, besteht die erste Vorrichtungskomponente beispielsweise aus einer metallischen Führungsschiene. Abhängig von der spezifischen Gestaltung und den technischen Anforderungen kann diese Schiene unterschiedliche Profile aufweisen. Sie fungiert als robuste Gleit- und Referenzfläche für den Führungswagen. Im Falle der Profilschienenführung bewegt sich der Führungswagen, der alternativ auch als Führungsschlitten bezeichnet wird, entlang der Führungsschiene. Er bildet folglich eine bewegliche Vorrichtungskomponente. Abhängig von seiner konkreten Ausgestaltung kann dieser Führungswagen unterschiedliche Formen annehmen und für verschiedene Zwecke, beispielsweise zum Transport von Lasten, eingesetzt werden.

Eine alternative Ausführungsform einer Linearbewegungsvorrichtung ist der Kugelgewindetrieb, bei dem eine präzisionsgefertigte Spindel mit einem speziellen Spiralprofil als feststehende Vorrichtungskomponente dient. Die Spindel fungiert sowohl als Führungsals auch als Antriebselement für eine bewegliche Vorrichtungskomponente, die Spindelmutter.

In einem solchen Kugelgewindetrieb, der eine effiziente Methode zur Umwandlung einer Drehbewegung in eine lineare Bewegung darstellt, entspricht die Spindelmutter dem Profil der Spindel und bewegt sich linear entlang dieses Profils, wenn sich die Spindel dreht.

Ein charakteristisches Merkmal vieler solcher Linearbewegungsvorrichtungen ist die Integration von Wälzkörpern. Diese können als Kugeln oder Rollen realisiert sein und sind strategisch zwischen der beweglichen und der feststehenden Vorrichtungskomponente positioniert, um Reibung effektiv zu reduzieren. Bei Profilschienenführungen rollen die Wälzkörper zwischen Führungswagen und Führungsschiene, wohingegen sie bei Kugelgewindetrieben zwischen den Gewindegängen von Spindel und Spindelmutter agieren, um so Rotations- in Linearbewegung zu transformieren.

Viele moderne Anwendungen von Linearbewegungsvorrichtungen nutzen Sensoren, die z. B. an einer beweglichen Vorrichtungskomponente wie dem Führungswagen einer Profilschienenführung angeordnet sein können. Diese Sensoren benötigen in der Regel elektrische Energie. Um die an einem Führungswagen angeordneten Sensoren mit elektrischer Energie zu versorgen, ist es beispielsweise üblich, die Energie von einer externen Energiequelle über ein mit dem Führungswagen verbundenes Kabel zuzuführen. Dies ist nachteilig, zumal entsprechende Kabelverbindungen häufig teuer und störanfällig sind. Alternativ können zur Energieversorgung der jeweiligen Sensoren Batterien vorgesehen sein, welche am Führungswagen angeordnet sind, sodass eine Kabelverbindung zu einer externen Energiequelle nicht benötigt wird. Dies ist nachteilig, zumal die Batterien von Zeit zu Zeit ausgetauscht werden müssen.

"Energy Harvesting" (wörtlich: "Energieernte") bezeichnet den Prozess, Energie aus externen Quellen zu gewinnen und in eine nutzbare Form umzuwandeln. Dieses Konzept hat in den letzten Jahren in vielen Bereichen der Technik an Bedeutung gewonnen, insbesondere im Hinblick auf die Schaffung nachhaltiger und energieeffizienter Lösungen. Speziell für Linearbewegungsvorrichtungen, wie Profilschienenführungen, Kugelgewindetriebe und andere mechanische Systeme, die in der Automatisierungstechnik und im Präzisionsmaschinenbau eine wesentliche Rolle spielen, gibt es gute Gründe für Energy-Harvesting-Lösungen.

Bei batteriebetriebenen Linearbewegungsvorrichtungen kann Energy Harvesting dazu beitragen, die Batterielebensdauer zu verlängern, indem zusätzliche Energiequellen genutzt werden. Viele moderne Anwendungen, nutzen Sensoren, die an vielen Stellen verteilt sind, z. B. an den beweglichen Vorrichtungskomponenten (wie Führungswagen) von Linearbewegungsvorrichtungen. Diese Sensoren benötigen Energie, und in vielen Fällen ist es nicht praktikabel, sie regelmäßig mit neuen Batterien zu versorgen. Energy Harvester können hier Abhilfe schaffen. Verschiedene Technologien sind bereits in der Entwicklung oder Anwendung, um die kinetische oder thermische Energie, die während des Betriebs einer mechanischen Vorrichtung erzeugt wird, in elektrische Energie umzuwandeln und wiederzuverwenden. Hierzu zählen Mechanismen wie Reibräder oder Druckräder, piezoelektrische Substanzen, die durch mechanischen Druck infolge von Vibrationen während des Betriebs Strom produzieren, sowie thermoelektrische Generatoren (TEGs), die aus Temperaturdifferenzen - wie etwa zwischen dem Führungswagen und seiner Umgebung - elektrische Energie gewinnen. Bei Linearbewegungsvorrichtungen sind diese Techniken jedoch oft nicht ausreichend effektiv, um bedeutende Energiemengen zu generieren.

Dokument US7126233 B2 bezieht sich auf ein System zur Erzeugung elektrischer Energie.

Die Dokumente DE102017212448 A1, CN101898517 A, EP1134444 B1, beziehen sich auf Linearbewegungsvorrichtungen.

### Zusammenfassung der Erfindung

Aufgabe der vorliegenden Erfindung ist es daher, die Nachteile der vorbeschriebenen Lösungen zu überwinden und ein System zur Erzeugung elektrischer Energie in einer Linearbewegungsvorrichtung sowie eine mit einem solchen System ausgestattete Linearbewegungsvorrichtung bereitzustellen, die effizientes, flexibel einsetzbares und kostengünstiges Energy Harvesting ermöglichen.

Die vorgenannte Aufgabe wird gemäß der vorliegenden Erfindung durch ein System zur Erzeugung elektrischer Energie in einer Linearbewegungsvorrichtung mit den Merkmalen des Anspruchs 1 und durch eine Linearbewegungsvorrichtung mit den Merkmalen des Anspruchs 35 gelöst.

Das System zur Erzeugung elektrischer Energie ist bestimmt für eine Linearbewegungsvorrichtung, welche eine erste Vorrichtungskomponente und eine zweite Vorrichtungskomponente aufweist, wobei die zweite Vorrichtungskomponente über Wälzkörper an der ersten Vorrichtungskomponente gestützt ist, sodass die zweite Vorrichtungskomponente relativ zur ersten Vorrichtungskomponente linear bewegbar ist und sich die Wälzkörper im Betrieb der Linearbewegungsvorrichtung bei einer Bewegung der zweiten Vorrichtungskomponente relativ zur ersten Vorrichtungskomponente relativ zur ersten Vorrichtungskomponente und zur zweiten Vorrichtungskomponente bewegen.

Gemäss der Erfindung umfasst das System zur Erzeugung elektrischer Energie: die Wälzkörper, die im Betrieb der Linearbewegungsvorrichtung entlang einer Bewegungsrichtung bewegbar sind; eine Einrichtung zur Erzeugung eines statischen Magnetfeldes in einem Raumbereich, den die Wälzkörper im Betrieb der Linearbewegungsvorrichtung bei einer Bewegung entlang der Bewegungsrichtung nacheinander durchqueren müssen, wobei die Wälzkörper aus einem magnetisch permeablen Material bestehen, sodass die Wälzkörper geeignet sind, das Magnetfeld abhängig von der Position der Wälzkörper in dem einen Raumbereich zu beeinflussen; und mindestens eine Induktionsspule mit mindestens einer Spulenwindung, wobei die mindestens eine Induktionsspule relativ zu der Einrichtung zur Erzeugung eines statischen Magnetfeldes derart stationär angeordnet ist, dass die Induktionsspule (bzw. die mindestens eine Spulenwindung) aufgrund einer Änderung der Position der Wälzkörper bei einer Bewegung der Wälzkörper entlang der Bewegungsrichtung durch den einen Raumbereich eine Änderung eines magnetischen Flusses erfährt, die in der mindestens einen Spulenwindung eine elektrische Spannung induziert.

Das erfindungsgemäße System zur Erzeugung elektrischer Energie in einer Linearbewegungsvorrichtung bietet mehrere Vorteile.

Das System wandelt die mechanische Energie, die durch die Bewegung der zweiten Vorrichtungskomponente (z. B. eines Führungswagen oder -schlitten einer Profilschienenführung) entlang der ersten Vorrichtungskomponente (z. B. einer Führungsschiene der Profilschienenführung) erzeugt wird, direkt in elektrische Energie um. Dies ermöglicht eine effiziente Nutzung der vorhandenen kinetischen Energie.

Die zurückgewonnene elektrische Energie kann zur Versorgung elektrischer Geräte wie Sensoren, Prozessoren oder Kommunikationsschnittstellen verwendet werden, die sich auf der beweglichen Vorrichtungskomponente (z. B. Führungswagen oder -schlitten) befinden. Dadurch kann der Bedarf an externen Energiequellen reduziert oder sogar eliminiert werden.

Die erzeugte elektrische Energie kann in einem Energiespeicher gesammelt und gespeichert werden, sodass sie bei Bedarf zur Verfügung steht. Dies kann die Lebensdauer von batteriebetriebenen Systemen verlängern oder die Notwendigkeit eines regelmäßigen Batteriewechsels reduzieren.

Das System kann direkt in bestehende Linearbewegungsvorrichtungen wie Profilschienenführungen oder Kugelgewindetrieben (Kugelumlaufspindeln) integriert werden.

Es sind keine zusätzlichen beweglichen Teile erforderlich, was die Zuverlässigkeit und Langlebigkeit erhöht.

Die Wälzkörper müssen selbst keine Körper sein, welche eine permanente Magnetisierung aufweisen. Die Wälzkörper müssen lediglich aus einem magnetisch permeablen Material bestehen, welches auf ein von der Einrichtung zur Erzeugung eines statischen Magnetfeldes bereitgestelltes äusseres Magnetfeld derart reagiert, dass der jeweilige Wälzkörper das bereitgestellte Magnetfeld in der Umgebung des Wälzkörpers beeinflusst, beispielsweise hinsichtlich des räumlichen Verlaufs der Feldlinien oder hinsichtlich der Feldstärke des magnetischen Feldes. Daraus resultiert ein magnetisches Feld, welches in der Umgebung der Wälzkörper hinsichtlich der Richtung und/oder der Grösse der Feldstärke von der aktuellen Position der jeweiligen Wälzkörper abhängig ist. Demzufolge entsteht bei einer Bewegung der Wälzköper relativ zu der Induktionsspule (d.h. während einer Bewegung der ersten Vorrichtungskomponente relativ zu der zweiten Vorrichtungskomponente) eine Änderung des magnetischen Flusses, welche durch elektromagnetische Induktion in der mindestens einen Spulenwindung der Induktionsspule eine elektrische Spannung induziert

Durch den Einsatz von Wälzkörpern aus weichmagnetischen Werkstoffen (z. B. Stahl) wird eine hohe relative magnetische Permeabilität erreicht. Dies erhöht den Wirkungsgrad der Energieumwandlung, da die Wälzkörper den räumlichen Verlauf der Magnetfeldlinien wirksam beeinflussen.

Während einer Bewegung der zweiten Vorrichtungskomponente (z. B. Führungswagen oder -schlitten) relativ zur ersten Vorrichtungskomponente wird in der Induktionsspule durch elektromagnetische Induktion periodisch eine elektrische Spannung induziert. Dies kann für Anwendungen nützlich sein, die eine solche periodische Energiequelle benötigen oder nutzen können.

Wie aus den beigefügten Zeichnungen ersichtlich, gibt es mehrere Ausführungsformen, die sich in der Konstruktion der Magnetfelderzeugung und der Anordnung der Induktionsspule unterscheiden. Dies gibt den Entwicklern ein hohes Maß an Flexibilität bei der Anpassung an spezifische Anwendungen oder Konstruktionsanforderungen.

Gemäß einer bevorzugten Ausführungsform des erfindungsgemäßen Systems ist vorgesehen, dass die Einrichtung zur Erzeugung eines statischen Magnetfeldes durch einen Permanentmagneten aus hartmagnetischem Material gebildet ist.

Die Verwendung eines Permanentmagneten aus hartmagnetischem Material in der bevorzugten Ausführungsform hat mehrere Vorteile. So gewährleistet ein Permanentmagnet aus hartmagnetischem Material ein konstantes und stabiles Magnetfeld, das weder durch äußere Einflüsse noch durch die Anordnung der Wälzkörper beeinflusst wird. Permanentmagnete aus hartmagnetischem Material haben eine lange Lebensdauer und verlieren im Laufe der Zeit nur sehr langsam an Magnetkraft. Da das Magnetfeld durch den Permanentmagneten erzeugt wird, ist für den Betrieb des Systems keine externe Energiequelle erforderlich.

Gemäß einer Weiterbildung dieser bevorzugten Ausführungsform ist vorgesehen, dass der Permanentmagnet im Wesentlichen U-förmig ausgebildet ist, wobei seine beiden Enden unterschiedliche magnetische Polaritäten aufweisen, und wobei der Raum zwischen diesen beiden Enden von Magnetfeldlinien des statischen Magnetfeldes durchzogen und zur Durchquerung durch die Wälzkörper im Betrieb der Linearbewegungsvorrichtung ausgebildet ist.

Dank der U-förmigen Ausbildung des Permanentmagneten konzentrieren sich die Magnetfeldlinien zwischen seinen beiden Enden. Durch die spezielle Anordnung wird ein großer **Teil** des magnetischen Flusses des vom Permanentmagneten erzeugten Magnetfeldes in den Wälzkörpern konzentriert. Dies sorgt für eine optimierte Nutzung des Magnetfeldes.

Die Wälzkörper können dabei sowohl in Kugel- als auch in Rollenform verwendet werden, was Flexibilität in der Konstruktion bietet. Je nach Position der Wälzkörper ändert sich der Verlauf der Magnetfeldlinien, was zu unterschiedlichen Magnetfeldstärken und -verteilungen führt. Diese Eigenschaft kann zur Steuerung und Modulation des Magnetfeldes genutzt werden. Da der Permanentmagnet aus einem hartmagnetischen Material besteht, wird der Verlauf der Feldlinien im Inneren des Magneten nicht oder nur geringfügig von der Position der Wälzkörper beeinflusst. Dies gewährleistet eine konstante Leistung des Systems.

In einer alternativen bevorzugten Ausführungsform des erfindungsgemäßen Systems ist die Einrichtung zur Erzeugung eines statischen Magnetfeldes durch einen magnetisierten Körper gebildet und umfasst:
- einen Permanentmagneten aus hartmagnetischem Material mit gegenüberliegenden Enden unterschiedlicher magnetischer Polarität; und
- zwei Flussleitstücke, wobei ein erster Endabschnitt eines ersten Flussleitstücks mit einem Ende des Permanentmagneten verbunden ist und ein erster Endabschnitt eines zweiten Flussleitstücks mit einem gegenüberliegenden Ende des Permanentmagneten verbunden ist.

Diese alternative Ausführungsform unterscheidet sich von der vorhergehenden Ausführungsform und deren Weiterbildung durch das Hinzufügen von Flussleitstücken. Diese Flussleitstücke, die aus weichmagnetischem Material mit hoher relativer magnetischer Permeabilität bestehen, spielen eine wesentliche Rolle bei der Manipulation und Steuerung des vom Permanentmagneten erzeugten Magnetfeldes.

Der Hauptvorteil dieser alternativen Ausführungsform gegenüber der Ausführungsform mit einem Permanentmagneten (ohne Flussleitstücke) liegt in den verbesserten Möglichkeiten zur Steuerung und Manipulation des magnetischen Flusses, insbesondere in Bezug auf die Induktionsspule. Die Flussleitstücke bieten insbesondere die Möglichkeit, durch eine geeignete Wahl der Form der jeweiligen Flussleitstücke und der relativen magnetischen Permeabilität des jeweiligen Materials der Flussleitstücke das Magnetfeld insbesondere hinsichtlich des räumlichen Verlaufs der Feldlinien und der Feldstärke anzupassen, jeweils abhängig von der jeweiligen Anordnung des Permanentmagneten, der Wälzkörper und der Induktionsspule relativ zueinander.

Folglich bietet diese alternative Ausführungsform eine verbesserte Magnetfeldkontrolle und maximale induzierte Spannungen bei gleichzeitiger Minimierung potenzieller (insbesondere durch eine Erzeugung von Wirbelströmen in einem Flussleitstück während einer Bewegung der Wälzkörper relativ zu dem jeweiligen Flussleitstück verursachte) Energieverluste, insbesondere im Falle einer Konfiguration der Flussleitstücke als Blechpaket (d. h. gestapelte Anordnung einer Vielzahl dünner, elektrisch gegeneinander isolierter Bleche oder Folien aus weichmagnetischem Material), welche geeignet ist, eine Ausbildung von Wirbelströmen in eine Flussleitstück während einer Bewegung der Wälzkörper zu vermeiden. Dadurch ist diese alternative Ausführungsform sehr effizient und besonders leistungsfähig.

Gemäß einer bevorzugten Ausgestaltung der vorbeschriebenen Ausführungsform kann an dem der mindestens einen Induktionsspule benachbarten zweiten Ende mindestens eines der beiden Flussleitstücke ein Polschuh aus weichmagnetischem Material angeordnet sein, um den räumlichen Verlauf der Magnetfeldlinien in der Umgebung der mindestens einen Induktionsspule zu optimieren.

Durch die Verwendung eines Polschuhs aus weichmagnetischem Werkstoff kann der räumliche Verlauf der Feldlinien des Magnetfeldes in der Umgebung der Induktionsspule optimiert werden. Das Hauptziel dieser Optimierung ist die Maximierung der elektrischen Energie, die bei der Bewegung der beweglichen Vorrichtungskomponente der Linearbewegungsvorrichtung erzeugt wird. Dies bedeutet, dass ein größerer Teil der mechanischen Energie der beweglichen Vorrichtungskomponente in elektrische Energie umgewandelt wird. Die Form des Polschuhs und die relative magnetische Permeabilität des Polschuhmaterials können zur Optimierung gewählt werden. Die Form des Polschuhs kann abhängig von der Form der Wälzkörper und der Anordnung der Spulenwindungen der Induktionsspule variiert werden.

In einer weiteren alternativen Ausführungsform des erfindungsgemäßen Systems ist vorgesehen, dass die Einrichtung zur Erzeugung eines statischen Magnetfeldes zwei U-förmige magnetisierte Körper umfasst, die jeweils aus einem Permanentmagneten und einem L-förmigen Flussleitstück bestehen, und die relativ zueinander beabstandet und spiegelsymmetrisch zur Bewegungsrichtung der Wälzkörper angeordnet sind, und wobei die Wälzkörper während des Betriebs der Linearbewegungsvorrichtung nacheinander den von Magnetfeldlinien des statischen Magnetfeldes durchzogenen Raum zwischen den beiden magnetisierten Körpern durchqueren.

Die magnetische Flussdichte im Raum zwischen den beiden magnetisierten Körpern ändert sich mit der Position der Wälzkörper, wodurch die Magnetfeldstärke für bestimmte Anwendungen eingestellt werden kann. Die Positionsänderungen der Wälzkörper und die damit verbundenen Änderungen des magnetischen Flusses induzieren in einer Induktionsspule eine elektrische Spannung und werden so zur Energieerzeugung und -rückgewinnung genutzt.

Dadurch, dass die Magnetfeldlinien zumindest bereichsweise parallel zur Bewegungsrichtung der Wälzkörper verlaufen, unterscheidet sich diese alternative Ausführungsform von den anderen Ausführungsformen und könnte in bestimmten Anwendungen, in denen spezifische Magnetfeld-Wälzkörper-Wechselwirkungen erforderlich sind, von Vorteil sein. Insgesamt bietet diese alternative Ausführungsform einen vielversprechenden Weg zur Erzeugung und Steuerung von Magnetfeldern für Wälzkörper, insbesondere unter Berücksichtigung des hohen Energierückgewinnungspotenzials.

In noch einer weiteren alternativen Ausführungsform des erfindungsgemäßen Systems ist vorgesehen, dass die Einrichtung zur Erzeugung eines statischen Magnetfeldes zwei identisch ausgebildete magnetisierte Körper mit einem E-förmigen Profil umfasst, die relativ zueinander beabstandet und spiegelsymmetrisch zur Bewegungsrichtung der Wälzkörper angeordnet sind, wobei das E-förmige Profil drei Schenkel aufweist und am mittleren Schenkel ein Permanentmagnet angebracht ist, und wobei die Wälzkörper während des Betriebs der Linearbewegungsvorrichtung nacheinander den von Magnetfeldlinien des statischen Magnetfeldes durchzogenen Raum zwischen den beiden magnetisierten Körpern durchqueren.

Durch die spiegelsymmetrische Anordnung der beiden magnetisierten Körper mit E-förmigem Profil entsteht im Raum zwischen ihnen ein gleichmäßiges und konsistentes Magnetfeld. Dies ermöglicht eine zuverlässige Interaktion mit den durchquerenden Wälzkörpern. Zudem können durch das E-förmige Profil mit drei Schenkeln spezifische Magnetfeldkonfigurationen erzeugt werden. Dabei kann der mittlere Schenkel mit dem Permanentmagneten dazu dienen, ein intensives und zentriertes Magnetfeld im Bereich der Wälzkörperbewegung zu erzeugen.

Da die Wälzkörper während des Betriebs nacheinander den von Magnetfeldlinien durchzogenen Raum durchqueren, kann eine gleichbleibende magnetische Interaktion gewährleistet werden, die zu einer effizienten Energieerzeugung oder -rückgewinnung beiträgt.

Eine erfindungsgemäße Linearbewegungsvorrichtung mit einer ersten Vorrichtungskomponente und einer zweiten Vorrichtungskomponente, welche zweite Vorrichtungskomponente über Wälzkörper an der ersten Vorrichtungskomponente gestützt ist, sodass die zweite Vorrichtungskomponente relativ zur ersten Vorrichtungskomponente linear bewegbar ist, weist mindestens ein erfindungsgemässes System zur Erzeugung elektrischer Energie auf, wobei die Einrichtung zur Erzeugung eines statischen Magnetfelds und die mindestens eine Induktionsspule stationär zur ersten Vorrichtungskomponente oder stationär zur zweiten Vorrichtungskomponente angeordnet sind.

Die Vorteile einer solchen erfindungsgemäßen Linearbewegungsvorrichtung liegen auf der Hand.

Die Linearbewegungsvorrichtung ermöglicht die Umwandlung der mechanischen Energie, die während der Bewegung der beweglichen Vorrichtungskomponente (z. B. Führungswagen oder -schlitten) erzeugt wird, in elektrische Energie. Dies wird als "Energy Harvesting" bezeichnet.

Die erzeugte elektrische Energie kann direkt in der ersten bzw. zweiten Vorrichtungskomponente, an welcher die Einrichtung zur Erzeugung eines statischen Magnetfelds und die mindestens eine Induktionsspule stationär angeordnet sind, gespeichert werden. Dies kann dazu beitragen, elektrische Geräte oder Systeme (z. B. Sensoren, Prozessoren und Kommunikationsschnittstellen), die an dieser Vorrichtungskomponente angebracht sind, autonom mit Energie zu versorgen, wodurch externe Energiequellen oder häufige Batteriewechsel reduziert oder vermieden werden.

Die Integration des erfindungsgemäßen Systems zur Erzeugung elektrischer Energie in die Linearbewegungsvorrichtung ermöglicht eine kompakte und effiziente Lösung, die keine zusätzlichen externen Geräte oder Systeme erfordert. Außerdem gibt es verschiedene Ausführungsformen dieses Systems, was eine hohe Flexibilität bei der Integration in verschiedene Anwendungen oder Konfigurationen von Linearbewegungsvorrichtungen bietet.

Da das erfindungsgemäße System zur Erzeugung elektrischer Energie hauptsächlich auf magnetischen Eigenschaften und Induktion basiert, gibt es weniger bewegliche Teile, die verschleißen können, was zu einer längeren Lebensdauer und geringeren Wartungsanforderungen für die Linearbewegungsvorrichtung führt.

Die Möglichkeit, Energie zurückzugewinnen und wiederzuverwenden, kann den Energieverbrauch und damit auch den CO2-Fußabdruck verringern. Energy Harvesting kann den Bedarf an externen Energiequellen oder regelmäßigen Batteriewechseln reduzieren, was langfristig auch zu Kosteneinsparungen führen kann.

### Kurze Beschreibung der Zeichnungen

Weitere Vorteile und Merkmale der vorliegenden Erfindung ergeben sich aus der ausführlichen Beschreibung mehrerer Ausführungsformen der vorliegenden Erfindung anhand der nachfolgenden Zeichnungen.

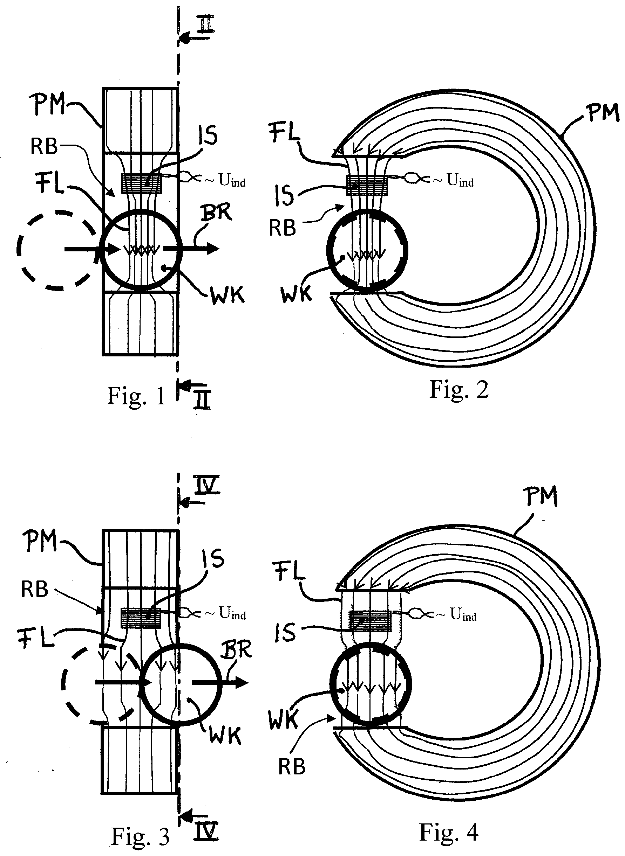

Figuren 1 bis 4 zeigen eine erste Ausführungsform eines erfindungsgemäßen Systems zur Erzeugung elektrischer Energie in einer Linearbewegungsvorrichtung gemäß einer parallel zur Bewegungsrichtung der Wälzkörper geschnittenen Seitenansicht (Figuren 1 und 3) und gemäß einer senkrecht zur Bewegungsrichtung der Wälzkörper geschnittenen Draufsicht (Figuren 2 und 4) auf die Schnittebenen II-II und IV-IV der Figuren 1 und 3.

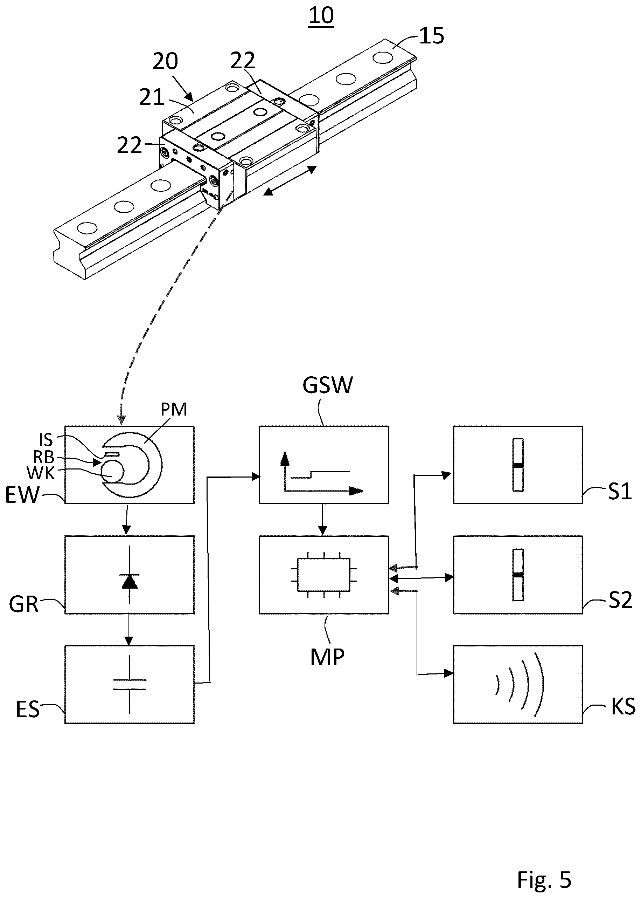

Figur 5 zeigt ein schematisches Blockablaufdiagramm der Umwandlung von mechanischer Energie in elektrische Energie sowie der anschließenden Speicherung und Nutzung der elektrischen Energie in einer erfindungsgemäßen Linearbewegungsvorrichtung.

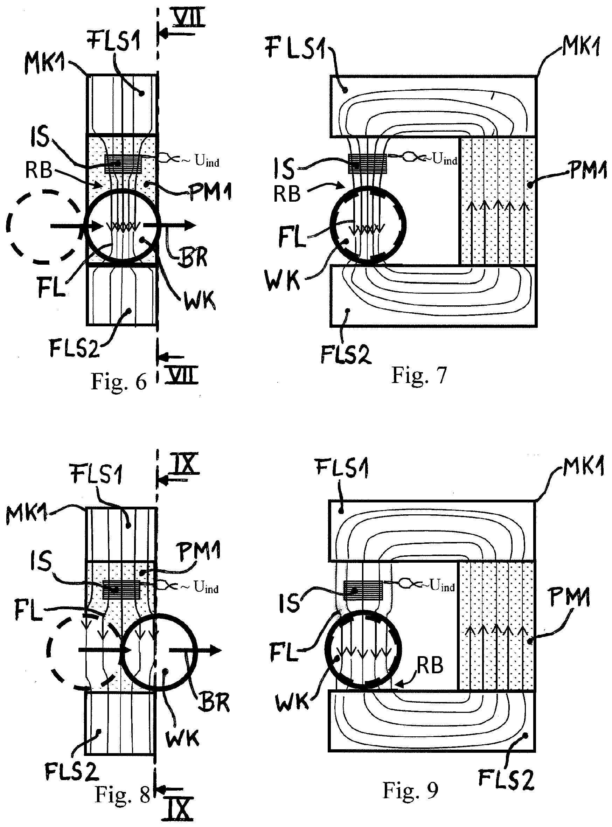

Figuren 6 bis 9 zeigen eine zweite Ausführungsform eines erfindungsgemäßen Systems zur Erzeugung elektrischer Energie in einer Linearbewegungsvorrichtung gemäß einer parallel zur Bewegungsrichtung der Wälzkörper geschnittenen Seitenansicht (Figuren 6 und 8) und gemäß einer senkrecht zur Bewegungsrichtung der Wälzkörper geschnittenen Draufsicht (Figuren 7 und 9) auf die Schnittebenen VII-VII und IX-IX der Figuren 6 und 8.

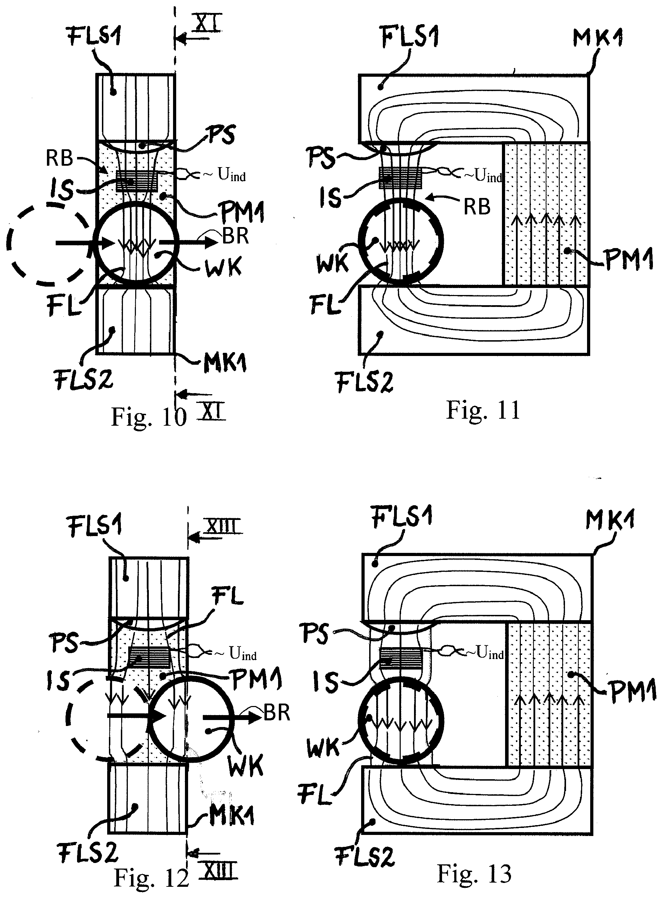

Figuren 10 bis 13 zeigen eine dritte Ausführungsform eines erfindungsgemäßen Systems zur Erzeugung elektrischer Energie in einer Linearbewegungsvorrichtung gemäß einer parallel zur Bewegungsrichtung der Wälzkörper geschnittenen Seitenansicht (Figuren 10 und 12) und gemäß einer senkrecht zur Bewegungsrichtung der Wälzkörper geschnittenen Draufsicht (Figuren 11 und 13) auf die Schnittebenen XI-XI und XIII-XIII der Figuren 10 und 12.

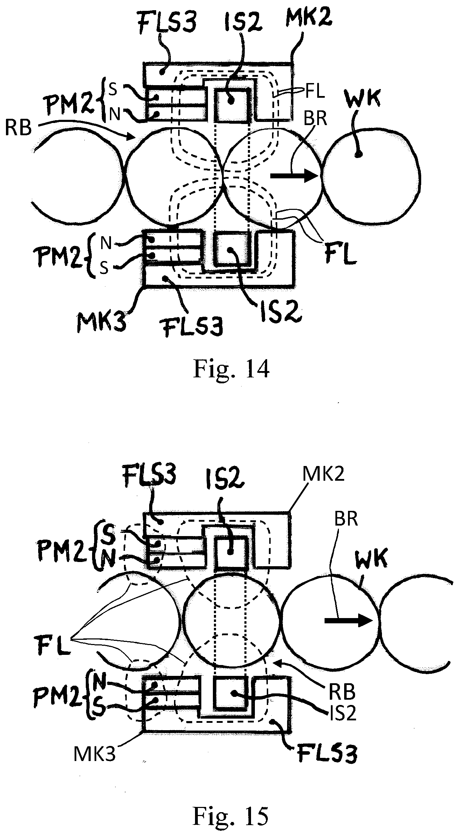

Figuren 14 und 15 zeigen eine vierte Ausführungsform eines erfindungsgemäßen Systems zur Erzeugung elektrischer Energie in einer Linearbewegungsvorrichtung gemäß einer parallel zur Bewegungsrichtung der Wälzkörper geschnittenen Seitenansicht in verschiedenen Bewegungspositionen der Wälzkörper.

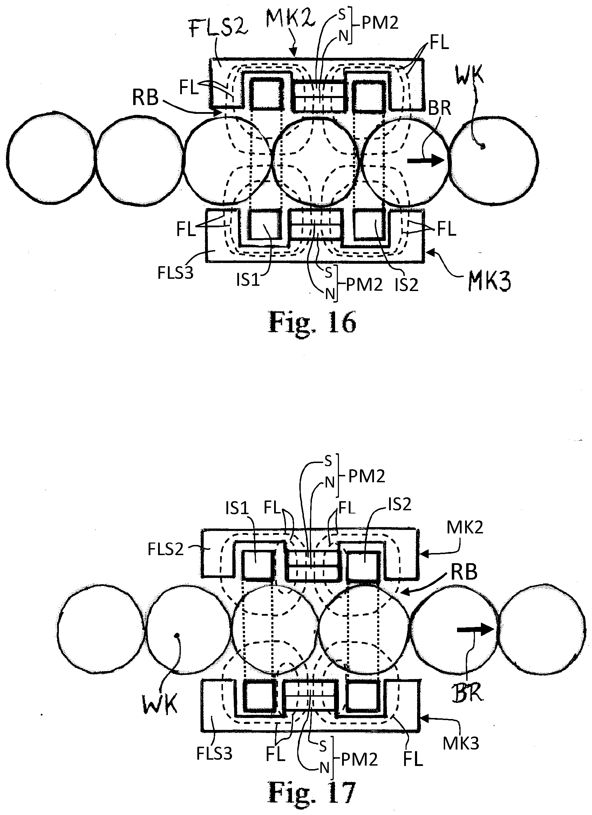

Figuren 16 und 17 zeigen eine fünfte Ausführungsform eines erfindungsgemäßen Systems zur Erzeugung elektrischer Energie in einer Linearbewegungsvorrichtung gemäß einer parallel zur Bewegungsrichtung der Wälzkörper geschnittenen Seitenansicht in verschiedenen Bewegungspositionen der Wälzkörper.

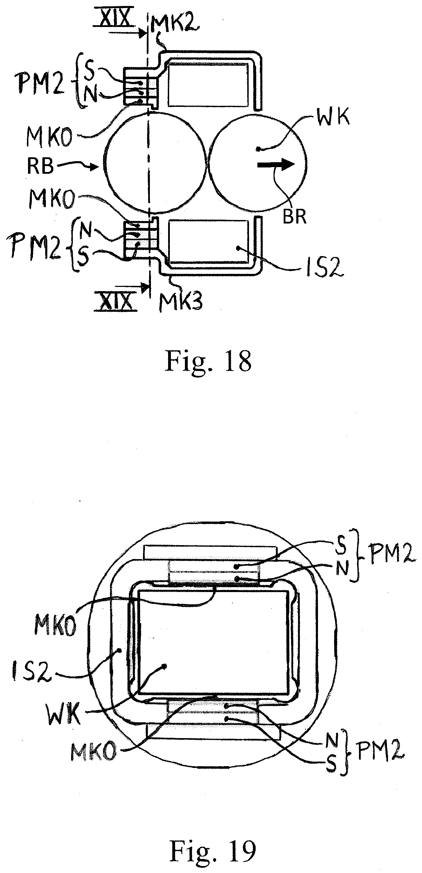

Figuren 18 und 19 zeigen eine sechste Ausführungsform eines erfindungsgemäßen Systems zur Erzeugung elektrischer Energie in einer Linearbewegungsvorrichtung gemäß einer parallel zur Bewegungsrichtung der Wälzkörper geschnittenen Seitenansicht (Figur 18) und gemäß einer senkrecht zur Bewegungsrichtung der Wälzkörper geschnittenen Draufsicht (Figur 19) auf die Schnittebene XIX-XIX der Figur 18.

### Detaillierte Beschreibung von Ausführungsformen

Die beigefügten Zeichnungen zeigen verschiedene Varianten eines innovativen Systems zur Erzeugung elektrischer Energie für Linearbewegungsvorrichtungen wie Profilschienenführungen oder Spindelführungen/Kugelgewindetriebe.

Bei einer Linearbewegungsvorrichtung gibt es in der Regel eine (in vielen Fällen feststehende) erste Vorrichtungskomponente (Führungsbauteil), z.B. eine Führungsschiene bei einer Profilschienenführung oder eine Spindel bei einer Spindelführung oder einem Kugelgewindetrieb. Eine an der ersten Führungsvorrichtung geführte zweite Vorrichtungskomponente (Führungskomponente), z. B. ein Führungswagen bei einer Profilschienenführung oder eine Spindelmutter bei einer Spindelführung oder einem Kugelgewindetrieb, bewegt sich entlang dieser ersten Vorrichtungskomponente und wird durch Wälzkörper, z. B. Rollen oder Kugeln, an der ersten Vorrichtungskomponente abgestützt.

Die Linearbewegungsvorrichtung kann in verschiedenen Betriebsarten arbeiten. Bei Profilschienenführungen, insbesondere bei Wälzkörperumlaufführungen, erfolgt eine kontinuierliche Dreh- oder Umlaufbewegung der Kugeln oder Rollen entlang eines geschlossenen Pfads. Sie werden typischerweise in Anwendungen eingesetzt, bei denen die Last kontinuierlich in beide Richtungen bewegt werden muss, ohne dass ein Rücklaufmechanismus erforderlich ist.

Das hier vorgestellte System zur Erzeugung elektrischer Energie kann insbesondere an der beweglichen Vorrichtungskomponente solcher Linearbewegungsvorrichtungen angebracht werden. Es umfasst eine Einrichtung PM, MK1, MK2, MK3, die ein statisches Magnetfeld erzeugt und einen Raumbereich RB begrenzt, durch den sich die Wälzkörper WK (Rollen oder Kugeln) im Betrieb der Linearbewegungsvorrichtung bei einer Bewegung der ersten Vorrichtungskomponente relativ zur zweiten Vorrichtungskomponente bewegen müssen. Diese Wälzkörper WK bestehen aus einem magnetisch permeablen Material, beispielsweise aus einem weichmagnetischen Material mit hoher magnetischer Permeabilität, d. h. sie beeinflussen den Verlauf der Magnetfeldlinien FL des statischen Magnetfeldes.

Bewegt sich die zweite Vorrichtungskomponente entlang der ersten Vorrichtungskomponente, so ändert sich das Magnetfeld in der Nähe der Wälzkörper WK (Rollen oder Kugeln) in Abhängigkeit von deren aktueller Position relativ zu der jeweiligen Einrichtung PM, MK1, MK2, MK3 zur Erzeugung des statischen Magnetfeldes.

Neben der Einrichtung PM, MK1, MK2, MK3 zur Erzeugung des statischen Magnetfeldes ist jeweils mindestens eine Induktionsspule IS, IS1, IS2 mit mindestens einer Spulenwindung vorhanden, die an einer vorgegebenen Position (d.h. stationär) relativ zu der jeweiligen Einrichtung PM, MK1, MK2, MK3 zur Erzeugung des statischen Magnetfeldes angeordnet ist. Diese Induktionsspule IS, IS1, IS2 ist ferner so angeordnet, dass Änderungen des Magnetfeldes, die durch eine Bewegung der zweiten Vorrichtungskomponente relativ zur ersten Vorrichtungskomponente hervorgerufen werden, zu einer zeitlichen Änderung des magnetischen Flusses in der Induktionsspule IS, IS1, IS2 führen. Das Induktionsgesetz besagt, dass diese Änderungen des magnetischen Flusses eine elektrische Spannung U_{ind} in der Induktionsspule IS, IS1, IS2 induzieren.

Während der Bewegung der Linearbewegungsvorrichtung erzeugt die Induktionsspule IS, IS1, IS2 eine elektrische Spannung, die sich mit der zeitlichen Änderung des magnetischen Flusses ändert. Diese Spannung kann mit herkömmlichen elektronischen Bauelementen in eine Gleichspannung umgewandelt und die erzeugte elektrische Energie in einem Energiespeicher ES gespeichert werden (siehe Fig. 5).

Bei diesem Prozess, der oft als "Energy Harvesting" bezeichnet wird, wird die mechanische Energie der beweglichen Vorrichtungskomponente in elektrische Energie umgewandelt und gespeichert. Diese gespeicherte elektrische Energie kann verwendet werden, um elektrische Geräte wie Sensoren S1, S2, Prozessoren und Kommunikationsschnittstellen KS zu betreiben, die an der beweglichen Vorrichtungskomponente angebracht sind (siehe Fig. 5).

Bei den beigefügten Zeichnungen handelt es sich um schematische Darstellungen zur Veranschaulichung der relevanten technischen Effekte. Insbesondere die dargestellten Verläufe der Magnetfeldlinien sind schematisch und nicht exakt berechnet.

Es gibt verschiedene Ausführungsformen, die sich in der Konstruktion der Einrichtung PM, MK1, MK2, MK3 zur Erzeugung des statischen Magnetfeldes, in der räumlichen Ausdehnung der Magnetfeldlinien in Bezug auf die Bewegungsrichtung BR der Wälzkörper WK (Rollen oder Kugeln) und in der Anordnung der Induktionsspule(n) IS, IS1, IS2 unterscheiden.

Fig. 1 bis 4 zeigen verschiedene Ansichten einer ersten Ausführungsform des erfindungsgemäßen Systems zur Erzeugung elektrischer Energie in einer Linearbewegungsvorrichtung. Die Ansichten zeigen unterschiedliche Betriebszustände mit unterschiedlichen Anordnungen der Wälzkörper WK relativ zu der Einrichtung PM zur Erzeugung eines statischen Magnetfeldes.

In diesen Figuren sind die Wälzkörper WK als Kugeln dargestellt, es können aber auch Rollen als Wälzkörper WK verwendet werden (siehe Fig. 19).

Die Einrichtung PM zur Erzeugung eines statischen Magnetfeldes besteht in diesem Fall aus einem einzigen Permanentmagneten PM, der im Wesentlichen U-förmig ist und an seinen beiden Enden unterschiedliche magnetische Pole aufweist.

Die Magnetfeldlinien FL verlaufen im Raumbereich RB zwischen den Enden des Permanentmagneten PM so, dass die Gesamtenergie des Magnetfeldes minimiert wird. Dies führt dazu, dass ein erheblicher Teil des vom Permanentmagneten PM erzeugten magnetischen Flusses in den Wälzkörpern WK konzentriert ist. Jeder einzelne Wälzkörper WK hat eine entsprechende Magnetisierung, die dem räumlichen Verlauf des Magnetfeldes entspricht.

Wichtig ist, dass die Anordnung der Wälzkörper WK relativ zum Permanentmagneten PM keinen oder nur einen geringen Einfluss auf den Verlauf der Magnetfeldlinien FL im Permanentmagneten PM hat, da dieser aus hartmagnetischem Material besteht.

Fig. 1 bis 4 zeigen die Magnetfeldlinien FL im Inneren der Wälzkörper WK, die im Wesentlichen senkrecht zur Bewegungsrichtung BR der Wälzkörper WK verlaufen.

Bei dieser Ausführungsform ist in dem Raumbereich RB zwischen den beiden Enden des Permanentmagneten PM, der von den Magnetfeldlinien FL durchzogen und von den Wälzkörpern WL durchquert wird, eine Induktionsspule IS angeordnet. Genauer gesagt ist diese Induktionsspule IS in einem Bereich zwischen einem Ende des Permanentmagneten PM und dem Bereich angeordnet, den die Wälzkörper WK bei einer Bewegung der beweglichen zweiten Vorrichtungskomponente entlang der ersten Vorrichtungskomponente nacheinander durchlaufen.

Die Induktionsspule IS besteht aus einer oder mehreren Spulenwindungen, die sich jeweils ringförmig um eine Mittelachse erstrecken, die im Wesentlichen senkrecht zur Bewegungsrichtung BR der Wälzkörper WK steht. Das heißt, jede Spulenwindung der Induktionsspule IS umschließt einen Flächenbereich, der im Wesentlichen parallel zur Bewegungsrichtung BR der Wälzkörper WK liegt.

Bei der in Fig. 1 und 2 dargestellten Wälzkörperanordnung ist das Magnetfeld im Bereich zwischen den beiden Enden des Permanentmagneten PM auf das Volumen eines einzigen Wälzkörpers WK konzentriert. Dadurch ist der einer Spulenwindung der Induktionsspule IS zugeordnete magnetische Fluss relativ groß.

Bei der in Fig. 3 und 4 dargestellten Wälzkörperanordnung wurde der Verlauf der Magnetfeldlinien FL so verändert, dass das Magnetfeld im Raumbereich RB zwischen den beiden Enden des Permanentmagneten PM auf das Volumen von zwei aufeinander folgenden Wälzkörpern WK verteilt ist. Dadurch wird der einer Spulenwindung der Induktionsspule IS zugeordnete magnetische Fluss gegenüber Fig. 1 und 2 deutlich reduziert.

Eine Änderung der Position der Wälzkörper WK von der Anordnung nach Fig. 1 und 2 zur Anordnung nach Fig. 3 und 4 bewirkt somit eine magnetische Flussänderung im Bereich der Induktionsspule IS. Diese magnetische Flussänderung induziert eine elektrische Spannung U_{ind} in den Spulenwindungen der Induktionsspule IS, wie durch das Symbol "~" für Wechselspannung an den Wicklungsenden der Induktionsspule IS dargestellt.

Fig. 5 zeigt schematisch den Prozess der Umwandlung von mechanischer in elektrische Energie, der in der erfindungsgemäßen Linearbewegungsvorrichtung, hier in der in Fig. 5 dargestellten Profilschienenführung 10 mit einem Führungswagen 20 und einer Führungsschiene 15, abläuft. Der Führungswagen 20 der Profilschienenführung 10 ist im vorliegen Bespiel in der Längsrichtung der Führungsschiene 15 linear bewegbar und umfasst einen Grundkörper 21 und zwei Endkappen 22, welche an den beiden in Längsrichtung der Führungsschiene 15 gegenüberliegenden Frontflächen des Grundkörpers 21 befestigt sind.

Der Führungswagen 20 der Profilschienenführung 10 ist im vorliegenden Beispiel an der Führungsschiene 15 über eine Mehrzahl von Wälzkörpern WK gestützt. Die Wälzkörper WK sind hierbei in mehreren am Führungswagen 20 ausgebildeten Wälzkörper-Umlaufkanälen angeordnet, welche sich jeweils entlang einer ringförmig geschlossenen Kurve erstrecken und dementsprechend bei einer Bewegung des Führungswagens 20 in der Längsrichtung der Führungsschiene 15 eine Zirkulation der Wälzkörper WK entlang ringförmig geschlossener Umlaufbahnen ermöglichen, wobei sich jeweils zwei Abschnitte jeder dieser ringförmig geschlossenen Umlaufbahnen in der Längsrichtung der Führungsschiene 15 am Grundkörper 21 oder durch den Grundkörper 21 erstrecken und sich jeweils zwei andere Abschnitte jeder dieser ringförmig geschlossenen Bahnen durch die zwei Endkappen 22 erstrecken (die räumliche Erstreckung dieser geschlossenen Umlaufbahnen der Wälzkörper WK ist in Fig. 5 nicht dargestellt).

Der Prozess der Umwandlung von mechanischer Energie in elektrische Energie setzt sich im Beispiel gemäss Fig. 5 aus mehreren Schlüsselkomponenten zusammen:
Zunächst wird in der Linearbewegungsvorrichtung, d.h. im Beispiel gemäss Fig. 5 in der Profilschienenführung 10, mechanische Energie erzeugt. Zu diesem Zweck wird der Führungswagen 20 in der Längsrichtung der Führungsschiene 15 bewegt (wie in Fig. 5 durch einen in der Nähe des Führungswagens 20 platzierten Doppelpfeil angedeutet ist). Diese Energie wird dann auf einen "Energiewandler" EW übertragen, der dem erfindungsgemäßen System zur Erzeugung elektrischer Energie entspricht. Kernstück dieses Energiewandlers EW ist die Anordnung einer Einrichtung zur Erzeugung des statischen Magnetfeldes, d.h. im vorliegenden Beispiel eines in den Fig. 1-4 dargestellten Permanentmagneten PM, in Kombination mit einer in Fig. 1-4 dargestellten Induktionsspule IS, in der bei einer Bewegung des Führungswagens 20 in der Längsrichtung der Führungsschiene 15 eine Spannung U_{ind} induziert wird. Die Erzeugung dieser Spannung U_{ind} beruht auf dem Prinzip, dass, wenn Wälzkörper WK der Profilschienenführung 10 relativ zur Einrichtung PM zur Erzeugung eines statischen Magnetfelds bewegt werden und dabei eine magnetische Flussänderung in der Induktionsspule IS bewirken, eine elektrische Energieerzeugung stattfindet.

Um diese induzierte Spannung U_{ind} für elektronische Geräte nutzbar zu machen, muss sie zunächst gleichgerichtet werden. Dies geschieht mithilfe eines Gleichrichters GR, der die Wechselspannung in eine Gleichspannung umwandelt. Die so erzeugte Gleichspannung wird anschließend in einem Energiespeicher ES gespeichert. Als Energiespeicher ES können verschiedene Komponenten dienen, z. B. ein Kondensator oder ein Akkumulator.

Schließlich wird die gespeicherte Energie genutzt, um verschiedene elektronische Komponenten zu versorgen, beispielsweise einen Gleichspannungswandler ("DC/DC Wandler") GSW und einen Mikroprozessor MP, welcher über den Gleichspannungswandler GSW mit Energie versorgt werden kann. Dieses spezielle System in Fig. 5 zeigt Komponenten wie Sensor S1 und Sensor S2, die zur Erfassung bestimmter Daten verwendet werden können. Außerdem gibt es eine drahtlose Kommunikationsschnittstelle KS. Diese kann verwendet werden, um die von den Sensoren S1, S2 erfassten Daten drahtlos an andere Systeme oder Geräte zu übertragen. Wie Fig. 5 andeutet, können die Sensoren S1, S2 und die drahtlose Kommunikationsschnittstelle KS mit dem Mikroprozessor MP verbunden sein, um eine Übertragung von Daten zu ermöglichen.

Im Beispiel gemäss Fig. 5 kann der Energiewandler EW, bestehend aus der Einrichtung PM zur Erzeugung eines statischen Magnetfelds und der Induktionsspule IS, beispielsweise stationär am Führungswagen 20 angeordnet sein, sodass der Energiewandler EW bei einer Bewegung des Führungswagen 20 entlang der Führungsschiene 15 mit dem Führungswagen 20 mitbewegt wird. Dabei kann der Energiewandler EW in der Nähe einer Umlaufbahn der Wälzkörper WK beispielsweise am Grundkörper 21 bzw. in einer im Grundkörper 21 ausbildeten Ausnehmung oder an einer der Endkappen 22 oder in einer in einer der Endkappen 22 ausgebildeten Ausnehmung installiert sein (in Fig. 5 nicht dargestellt). Entsprechend können die übrigen in Fig. 5 dargestellten elektronischen Komponenten (Gleichrichter GR, Energiespeicher ES, Gleichspannungswandler GSW, Mikroprozessor MP, Sensor S1, Sensor S2, drahtlose Kommunikationsschnittstelle KS) stationär am Führungswagen 20 angeordnet sein bzw. in den Führungswagen 20 integriert sein.

Der Energiewandler EW kann mit einer oder mehreren der vorstehend genannten elektronische Komponenten (z.B. dem Gleichrichter GR, Energiespeicher ES, einem oder mehreren Sensoren S1 und/oder S2) eine kompakte Einheit bilden, welche beispielsweise auf einem einzigen Träger oder in einem einzigen Gehäuse implementiert sein kann. Vorteilhafterweise kann eine derartige Einheit als Ganzes in der Nähe einer Umlaufbahn der Wälzkörper WK beispielsweise am Grundkörper 21 bzw. in einer im Grundkörper 21 ausbildeten Ausnehmung oder an einer der Endkappen 22 oder in einer in einer der Endkappen 22 ausgebildeten Ausnehmung installiert sein (in Fig. 5 nicht dargestellt).

Insgesamt gibt diese Fig. 5 einen anschaulichen Überblick über den Prozess der Energieumwandlung und -nutzung in einem konkreten technischen System gemäß der vorliegenden Erfindung mit dem Ziel, mechanische Bewegung in einer Linearbewegungsvorrichtung effizient in elektrische Energie umzuwandeln und diese für verschiedene elektronische Anwendungen nutzbar zu machen.

Fig. 6 bis 9 zeigen verschiedene Ansichten einer zweiten Ausführungsform des erfindungsgemäßen Systems zur Erzeugung elektrischer Energie in einer Linearbewegungsvorrichtung. Diese Ansichten ähneln denen der Fig. 1 bis 4 und zeigen unterschiedliche Perspektiven und Anordnungen der Wälzkörper WK in Bezug auf die Einrichtung MK1 zur Erzeugung eines statischen Magnetfeldes.

Die zweite Ausführungsform unterscheidet sich von der ersten im Wesentlichen dadurch, dass der Permanentmagnet PM durch einen magnetisierten Körper ersetzt wird. Dieser magnetisierte Körper mit der Bezeichnung MK1 besteht aus einem Permanentmagneten PM1 und zwei Flussleitstücken FLS1 und FLS2. Der Permanentmagnet PM1 ist ein homogen magnetisierter Quader aus hartmagnetischem Material, der an seinen gegenüberliegenden Enden unterschiedliche magnetische Pole aufweist. Die beiden Flussleitstücke FLS1 und FLS2 bestehen aus weichmagnetischem Material mit hoher relativer magnetischer Permeabilität und hoher Sättigungsmagnetisierung und werden durch das vom Permanentmagneten PM1 erzeugte Magnetfeld magnetisiert.

Bei dieser zweiten Ausführungsform sind die Wälzkörper WK (in diesem Fall Kugeln) so angeordnet, dass sie bei einer Bewegung der beweglichen Vorrichtungskomponente (z. B. des Führungswagens oder -schlittens) entlang der feststehenden Vorrichtungskomponente (z. B. der Führungsschiene) einen Raumbereich RB zwischen den beiden Enden der Flussleitstücke FLS1 und FLS2 durchqueren müssen. Die Anordnung des Permanentmagneten PM1, der Flussleitstücke FLS1 und FLS2 sowie der Wälzkörper WK bewirkt, dass die Magnetfeldlinien FL im Bereich dieser Elemente entlang geschlossener, im Wesentlichen ringförmiger Kurven verlaufen.

Fig. 6 und 8 zeigen die zweite Ausführungsform aus der gleichen Perspektive, nämlich senkrecht zur Bewegungsrichtung BR der Wälzkörper WK betrachtet. Fig. 8 zeigt jedoch einen Betriebszustand, bei dem die Wälzkörper WK gegenüber dem Betriebszustand nach Fig. 6 in Bewegungsrichtung BR um einen Abstand versetzt sind, der etwa dem Radius eines Wälzkörpers WK entspricht.

Fig. 7 zeigt die gleiche Wälzkörperanordnung wie Fig. 6, jedoch parallel zur Bewegungsrichtung BR in Draufsicht auf die Ebene VII-VII von Fig. 6 betrachtet. Fig. 9 zeigt die gleiche Wälzkörperanordnung wie Fig. 8, jedoch ebenfalls parallel zur Bewegungsrichtung BR in Draufsicht auf die Ebene IX-IX von Fig. 8 betrachtet.

Die Magnetfeldlinien FL im Inneren der Wälzkörper WK verlaufen auch bei der Ausführungsform nach Fig. 6 bis 9 im Wesentlichen senkrecht zur Bewegungsrichtung BR der Wälzkörper WK.

Auch bei dieser zweiten Ausführungsform ist eine Induktionsspule IS in einem Raumbereich RB zwischen dem freien Ende eines Flussleitstückes FLS1 und dem freien Ende des anderen Flussleitstücks FLS2 angeordnet. Genauer gesagt befindet sich die Induktionsspule IS in einem Bereich zwischen einem Ende eines Flussleitstücks FLS1 und einem Bereich in dem Raum zwischen den Enden der beiden Flussleitstücke FLS1 und FLS2, den die Wälzkörper WK nacheinander durchlaufen, wenn die bewegliche Vorrichtungskomponente entlang der feststehenden Vorrichtungskomponente bewegt wird. Die Induktionsspule IS ähnelt derjenigen in der ersten Ausführungsform und besteht aus einer oder mehreren Spulenwindungen, die sich ringförmig um eine Mittelachse der Induktionsspule IS erstrecken, die im Wesentlichen senkrecht zur Bewegungsrichtung BR der Wälzkörper WK ausgerichtet ist.

Bei dem in Fig. 6 und 7 dargestellten Betriebszustand ist die Wälzkörperanordnung derart, dass das erzeugte statische Magnetfeld im Bereich zwischen dem zweiten (dem Permanentmagneten PM1 abgewandten) Ende des einen Flussleitstücks FLS1 und dem zweiten (dem Permanentmagneten PM1 abgewandten) Ende des anderen Flussleitstücks FLS2 auf das Volumen eines einzigen Wälzkörpers WK konzentriert ist. Dadurch ist der einer Spulenwindung der Induktionsspule IS zugeordnete magnetische Fluss relativ groß.

Bei der Wälzkörperanordnung gemäß dem Betriebszustand nach Fig. 8 und 9 ist der Verlauf der Magnetfeldlinien FL so verändert, dass das erzeugte statische Magnetfeld im Bereich zwischen dem zweiten (dem Permanentmagneten PM1 abgewandten) Ende des einen Flussleitstücks FLS1 und dem zweiten (dem Permanentmagneten PM1 abgewandten) Ende des anderen Flussleitstücks FLS2 auf das Volumen von zwei aufeinander folgenden Wälzkörpern WK verteilt wird. Dadurch wird der einer Spulenwindung der Induktionsspule IS zugeordnete magnetische Fluss gegenüber dem in Fig. 6 und 7 dargestellten Betriebszustand deutlich reduziert.

Die Änderung der Position der Wälzkörper WK von der Anordnung nach Fig. 6 und 7 zur Anordnung nach Fig. 8 und 9 und umgekehrt bewirkt eine Änderung des magnetischen Flusses im Bereich der Induktionsspule IS. Diese Änderung induziert in den Wicklungen der Induktionsspule IS eine elektrische Spannung, die durch das Symbol "~" für Wechselspannung an den Wicklungsenden der Induktionsspule IS dargestellt wird.

Zusammenfassend unterscheidet sich die zweite Ausführungsform gemäß Fig. 6 bis 9 von der ersten Ausführungsform hauptsächlich durch das Vorhandensein der Flussleitstücke FLS1 und FLS2. Diese Flussleitstücke FLS1 und FLS2 ermöglichen eine größere magnetische Flussänderung und damit eine höhere induzierte Spannung U_{ind} beim Übergang der Wälzkörper WK zwischen den beiden Anordnungen. Zur Minimierung der Energieverluste, welche durch eine Erzeugung von Wirbelströmen in einem der Flussleitstücke FLS1 und FLS2 während einer Bewegung der Wälzkörper relativ zu dem jeweiligen Flussleitstück FLS1 bzw. FLS2 verursacht werden könnten, können die Flussleitstücke FLS1 und FLS2 vorteilhaft jeweils als Blechpakete aus weichmagnetischem Werkstoff ausgeführt sein.

Als weichmagnetische Werkstoffe für die Flussleitstücke FLS1 und FLS2 sind insbesondere Werkstoffe vorteilhaft, welche eine hohe relative magnetische Permeabilität, eine geringe Koerzitivfeldstärke und eine hohe Sättigungsmagnetisierung aufweisen (wie z.B. NiFe-, SiFe- oder CoFe-Legierungen).

Fig. 10 bis 13 zeigen verschiedene Ansichten einer dritten Ausführungsform eines erfindungsgemäßen Systems zur Erzeugung elektrischer Energie in einer Linearbewegungsvorrichtung. Diese Ausführungsform ähnelt im Wesentlichen der in Fig. 6 bis 9 gezeigten zweiten Ausführungsform. Ein markanter Unterschied besteht jedoch darin, dass am zweiten (dem Permanentmagneten PM1 abgewandten) Ende eines der beiden Flussleitstücke FLS1, das sich nahe der Induktionsspule IS befindet, ein sogenannter Polschuh PS aus einem weichmagnetischen Material angeformt ist.

Der Polschuh PS ermöglicht eine gezielte Veränderung und Steuerung des Magnetfeldes in der Nähe der Induktionsspule IS. Das Hauptziel dieser Veränderung und Steuerung ist die Erhöhung der elektrischen Energie, die durch die Bewegung der beweglichen Vorrichtungskomponente der Linearbewegungsvorrichtung erzeugt wird. Mit anderen Worten, der Wirkungsgrad der Umwandlung der mechanischen Energie der beweglichen Vorrichtungskomponente in elektrische Energie soll maximiert werden.

Die Form des Polschuhs PS und die magnetische Permeabilität des verwendeten Polschuhmaterials können sorgfältig gewählt werden, um dieses Ziel zu erreichen. Insbesondere kann die Geometrie des Polschuhs PS in Abhängigkeit von der Geometrie der Wälzkörper WK (z. B. Kugeln oder Rollen) und der Anordnung der Spulenwindungen der Induktionsspule IS gestaltet werden.

Um eine maximale Energieumwandlung von der mechanischen Energie der Linearbewegungseinrichtung in die erzeugte elektrische Energie zu gewährleisten, ist das Magnetfeld um die Induktionsspule IS durch den Polschuh PS so zu optimieren, dass bei der in Fig. 10 und 11 dargestellten Anordnung der Wälzkörper WK der einer Spulenwindung der Induktionsspule IS zugeordnete magnetische Fluss maximal ist und bei der in Fig. 12 und 13 dargestellten Anordnung der Wälzkörper WK dieser magnetische Fluss hingegen minimal ist.

Die besondere Gestaltung der dritten Ausführungsform nach Fig. 10 bis 13 ermöglicht diese Optimierung. Der Polschuh PS weist auf der der Induktionsspule IS zugewandten Seite eine konvex gekrümmte, d.h. nach außen gewölbte Oberfläche auf. Außerdem ist dieser Polschuh PS symmetrisch zu einer Verlängerung der Mittelachse der Induktionsspule IS angeordnet. Diese Mittelachse ist definiert als eine Linie, die senkrecht durch den Mittelpunkt der durch eine Spulenwindung der Induktionsspule IS definierten Fläche verläuft.

Durch diese besondere Gestaltung des Polschuhs PS wird der magnetische Fluss in den Wälzkörpern WK so gesteuert, dass er bei der Wälzkörperanordnung nach Fig. 12 und 13 besonders gering ist, was auch auf die konvex gekrümmte Oberfläche des Polschuhs PS zurückzuführen ist.

Das Ergebnis dieser Optimierung ist, dass bei einer Bewegung der Wälzkörper WK zwischen den in Fig. 10 und 11 einerseits und in Fig. 12 und 13 andererseits dargestellten Positionen eine signifikante Änderung des magnetischen Flusses auftritt. Dies führt zu einer hohen induzierten Spannung U_{ind}.

In Fig. 14 und 15 ist eine vierte Ausführungsform des erfindungsgemäßen Systems zur Erzeugung elektrischer Energie in einer Linearbewegungsvorrichtung dargestellt, wobei jeweils in einer Seitenansicht mit einer Blickrichtung senkrecht zur Bewegungsrichtung BR der Wälzkörper WK zwei unterschiedliche Anordnungen der Wälzkörper WK bezüglich der Einrichtung MK2, MK3 zur Erzeugung eines statischen Magnetfeldes gezeigt sind.

Die in dieser Ausführungsform verwendete Einrichtung zur Erzeugung eines statischen Magnetfeldes besteht aus zwei identischen, im Wesentlichen U-förmigen magnetisierten Körpern MK2 und MK3. Jeder dieser magnetisierten Körper MK2 und MK3 besteht aus einem Permanentmagneten PM2 und einem L-förmigen Flussleitstück FLS3 aus weichmagnetischem Material. Das Flussleitstück FLS3 ist an einem Endabschnitt mit einer Stirnfläche des Permanentmagneten PM2 verbunden und wird somit durch den Permanentmagneten PM2 magnetisiert. Ein gegenüberliegender Endabschnitt des Flussleitstücks FLS3 bildet den zweiten Schenkel des U-förmigen magnetisierten Körpers MK2 und MK3.

Die beiden magnetisierten Körper MK2 und MK3 sind im Abstand voneinander auf gegenüberliegenden Seiten des Raumbereichs RB angeordnet, den die Wälzkörper WK nacheinander in Bewegungsrichtung BR durchlaufen, wenn die eine bewegliche Vorrichtungskomponente (z. B. Führungswagen oder -schlitten) in Längsrichtung der anderen Vorrichtungskomponente (z. B. Führungsschiene) bewegt wird. Diese Anordnung ist spiegelbildlich zur Bewegungsrichtung BR der Wälzkörper WK ausgebildet, wie in Fig. 14 und 15 dargestellt. In diesem Fall handelt es sich um Rollen als Wälzkörper WK, und Fig. 14 und 15 zeigen jeweils eine Seitenansicht parallel zur Längsachse dieser Rollen.

Die beiden magnetisierten Körper MK2 und MK3 erstrecken sich in Bewegungsrichtung BR der Wälzkörper WK und haben eine Ausdehnung, die etwa dem Durchmesser der Wälzkörper WK bezogen auf die Bewegungsrichtung BR entspricht.

Fig. 14 zeigt einen Betriebszustand, bei dem die Wälzkörper WK in Bewegungsrichtung BR so angeordnet sind, dass einer von zwei aufeinanderfolgenden Wälzkörpern WK in einem Zwischenraum zwischen den Permanentmagneten PM2 der Magnetkörper MK2 und MK3 liegt. Der andere der beiden aufeinanderfolgenden Wälzkörper WK befindet sich gleichzeitig in einem Zwischenraum zwischen einem Ende des zweiten Schenkels des magnetisierten Körpers MK2, der durch das Flussleitstück FLS3 gebildet wird, und einem Ende des zweiten Schenkels des magnetisierten Körpers MK3, der ebenfalls durch das Flussleitstück FLS3 gebildet wird.

Im Betriebszustand nach Fig. 15 sind die Wälzkörper WK gegenüber der Anordnung im Betriebszustand nach Fig. 14 in Bewegungsrichtung BR um etwa den halben Wälzkörperdurchmesser versetzt.

In jedem Fall sind die beiden magnetisierten Körper MK2 und MK3 relativ zueinander beabstandet und spiegelsymmetrisch zur Bewegungsrichtung BR der Wälzkörper WK angeordnet und ihre Permanentmagnete PM2 so ausgerichtet, dass die Magnetisierungen der Permanentmagnete PM2 der beiden magnetisierten Körper MK2 und MK3 senkrecht zur Bewegungsrichtung BR der Wälzkörper WK gerichtet sind. Dabei sind die Magnetisierungen des Permanentmagneten PM2 des einen magnetisierten Körpers MK2 und des Permanentmagneten PM2 des anderen magnetisierten Körpers MK3 entgegengesetzt orientiert, wobei die Polaritäten in Fig. 14 bis 19 jeweils mit "S" für "Südpol" und "N" für "Nordpol" angegeben sind.

Die beiden magnetisierten Körper MK2 und MK3 erzeugen somit in dem Raumbereich RB, den die Wälzkörper WK bei einer Bewegung der einen beweglichen Vorrichtungskomponente der Linearbewegungsvorrichtung in Längsrichtung der anderen Vorrichtungskomponente der Linearbewegungsvorrichtung nacheinander durchqueren müssen, ein Magnetfeld, dessen (in Fig. 13 und 14 durch gestrichelte Linien repräsentierte) Feldlinien FL im Gegensatz zu den vorhergehenden Ausführungsformen der Fig. 1 bis 13 zumindest teilweise parallel zur Bewegungsrichtung BR der Wälzkörper WK verlaufen.

Bei der Wälzkörperanordnung nach Fig. 14 sind die Wälzkörper WK zwischen den magnetisierten Körpern MK2 und MK3 relativ stark magnetisiert, da sie sich genau in einem Zwischenraum zwischen den Permanentmagneten PM2 und zwischen den freien Schenkeln der magnetisierten Flussleitstücke FLS2 und FLS3 befinden. Dies führt zu einer relativ hohen magnetischen Flussdichte im Raum zwischen den beiden magnetisierten Körpern MK2 und MK3, wie in Fig. 14 dargestellt.

Im Betriebszustand nach Fig. 15 sind die Wälzkörper WK dagegen so angeordnet, dass sich sowohl die Permanentmagnete PM2 der magnetisierten Körper MK2 und MK3 als auch die freien Schenkel der Flussleitstücke FLS2 und FLS3 der magnetisierten Körper MK2 und MK3 in einer "Zwischenstellung" zwischen zwei aufeinanderfolgenden Wälzkörpern WK befinden. Bei dieser Anordnung verteilt sich das von den Permanentmagneten PM2 erzeugte und von den Flussleitstücken FLS2 und FLS3 übertragene Magnetfeld im Wesentlichen auf zwei aufeinanderfolgende Wälzkörper WK und deren Umgebung.

Die beiden magnetisierten Körper MK2 und MK3 erzeugen somit in beiden Wälzkörperanordnungen ein Magnetfeld, dessen Feldlinien FL zumindest teilweise parallel zur Bewegungsrichtung BR der Wälzkörper WK verlaufen.

Wie in Fig. 14 und 15 durch gestrichelte Linien angedeutet, bewirkt die Positionsänderung der Wälzkörper WK beim Übergang von der Anordnung nach Fig. 14 zur Anordnung nach Fig. 15 eine Änderung des räumlichen Verlaufs der Feldlinien FL mit Bezug auf die Anordnung der magnetisierten Körper MK2 und MK3 und der Induktionsspule IS2 und somit eine magnetische Flussänderung. Diese führt zur Induktion einer elektrischen Spannung U_{ind} in einer Induktionsspule IS2, deren Mittelachse kollinear zur Bewegungsrichtung BR der Wälzkörper WK verläuft. Die Spulenwindungen der Induktionsspule IS2 erstrecken sich somit ringförmig um den Raumbereich RB, den die Wälzkörper WK nacheinander durchqueren müssen, wie in Fig. 14 und 15 dargestellt. Die Spulenwindungen der Induktionsspule IS2 sind platzsparend jeweils zwischen den beiden Schenkeln der U-förmigen magnetisierten Körper MK2 und MK3 angeordnet (also jeweils zwischen dem vom Permanentmagneten PM2 gebildeten Schenkel und dem vom Flussleitstück FLS2, FLS3 gebildeten Schenkel).

Fig. 16 bis 19 zeigen detaillierte Darstellungen von zwei weiteren Varianten des erfindungsgemäßen Systems zur Erzeugung elektrischer Energie in einer Linearbewegungsvorrichtung, die auf der vorhergehenden vierten Ausführungsform gemäß Fig. 14 und 15 aufbauen. Diese weiteren Varianten werden hier als fünfte Ausführungsform (Fig. 16 und 17) und sechste Ausführungsform (Fig. 18 und 19) bezeichnet.

In der fünften Ausführungsform gemäß Fig. 16 und 17 ist eine weitere konstruktive Abwandlung der Einrichtung MK2, MK3 zur Erzeugung des statischen Magnetfeldes vorgesehen. Während in Fig. 14 und 15 jeweils zwei magnetisierte Körper MK2 und MK3 verwendet werden, die aus einem L-förmigen Flussleitstück FLS3 und einem Permanentmagneten PM2 bestehen, weist die fünfte Ausführungsform gemäß Fig. 16 und 17 eine Änderung in der Ausgestaltung dieser magnetisierten Körper MK2 und MK3 auf. Hier sind zwei identisch ausgebildete magnetisierte Körper MK2 und MK3 jeweils in einer Seitenansicht mit einer Blickrichtung senkrecht zur Bewegungsrichtung BR der Wälzkörper WK dargestellt, wobei die magnetisierten Körper MK2 und MK3 jeweils ein E-förmiges Profil mit insgesamt drei in Bewegungsrichtung BR beabstandeten Schenkeln aufweisen. Der mittlere Schenkel dieser E-förmigen magnetisierten Körper MK2 und MK3 ist auf einer Seite, die dem von den Wälzkörpern WK durchquerten Raumbereich RB zugewandt ist, durch einen Permanentmagneten PM2 gebildet. Der übrige Teil der magnetisierten Körper MK2 und MK3 ist jeweils durch ein Flussleitstück FL2, FLS 3 mit einem E-förmigen Profil gebildet, wobei die Länge des mittleren Schenkels des Flussleitstücks FLS2, FLS3 in einer Richtung senkrecht zur Bewegungsrichtung BR jeweils um eine Länge verkürzt ist, die der Länge des angebrachten Permanentmagneten PM2 entspricht.

Ein weiterer wesentlicher Unterschied dieser fünften Ausführungsform gegenüber Fig. 14 und 15 ist die Anordnung und Anzahl der Induktionsspulen. Anstelle der in Fig. 14 und 15 dargestellten einzelnen Induktionsspule IS2 werden in dieser fünften Ausführungsform zwei getrennte Induktionsspulen IS1 und IS2 verwendet. Diese beiden Induktionsspulen IS1 und IS2 sind in Bewegungsrichtung BR der Wälzkörper WK gesehen hintereinander und im Abstand zueinander so angeordnet, dass sie sich auf gegenüberliegenden Seiten des am mittleren Schenkel angebrachten Permanentmagneten PM2 befinden.

Feldlinien FL des von den magnetisierten Körpern MK2 und MK3 erzeugten magnetischen Feldes sind in Fig. 16 und 17 mit gestrichelten Linien dargestellt. Wie ersichtlich, ist das erzeugte magnetische Feld im Bereich der Induktionsspule IS1 im Wesentlichen parallel zur Längsachse der Induktionsspule IS1 (bzw. senkrecht zu der von einer Spulenwindung der Induktionsspule IS1 begrenzten Fläche) gerichtet. Entsprechend ist das erzeugte magnetische Feld im Bereich der Induktionsspule IS2 im Wesentlichen parallel zur Längsachse der Induktionsspule IS2 (bzw. senkrecht zu der von einer Spulenwindung der Induktionsspule IS2 begrenzten Fläche) gerichtet.

Die Positionsänderung der Wälzkörper WK beim Übergang von der Anordnung gemäss Fig. 16 zur Anordnung nach Fig. 17 bewirkt eine Änderung des räumlichen Verlaufs der Feldlinien FL mit Bezug auf die Anordnung der magnetisierten Körper MK2 und MK3 und der Induktionsspulen IS1 und IS2 und somit eine magnetische Flussänderung sowohl im Bereich der Induktionsspule IS1 als auch im Bereich der Induktionsspule IS2, sodass aufgrund der Änderungen des magnetischen Flusses im Bereich der Induktionsspule IS1 und im Bereich der Induktionsspule IS2 sowohl in den jeweiligen Spulenwindungen der Induktionsspule IS1 als auch in den jeweiligen Spulenwindungen der Induktionsspule IS2 jeweils eine elektrische Spannung induziert wird.

In der fünften Ausführungsform wurden bedeutsame Änderungen in der Konstruktion der magnetisierten Körper MK2 und MK3 und auch in der Anordnung und Anzahl der Induktionsspulen IS1 und IS2 vorgenommen. Diese Veränderungen zielen darauf ab, die Funktionalität des Systems zu optimieren. Das besondere Merkmal dieser Änderungen ist die beidseitige Anordnung der Induktionsspulen IS1 und IS2 um den zentralen Permanentmagneten PM2. Dies ermöglicht die Detektion von unterschiedlichen Polaritäten im statischen Magnetfeld, welches durch die Wälzkörper WK beeinflusst wird. Dies kann zu einer genaueren und differenzierteren Messung führen, indem die Wirkung der Wälzkörper WK auf das Magnetfeld aus verschiedenen Richtungen erfasst wird. Die fünfte Ausführungsform zielt also darauf ab, die Empfindlichkeit und Präzision des Systems in Bezug auf die Interaktion zwischen den Wälzkörpern WK und dem Magnetfeld zu verbessern.

Die sechste Ausführungsform nach Fig. 18 und 19 basiert konstruktiv ebenfalls auf der vierten Ausführungsform nach Fig. 14 und 15. Hier wird jedoch eine zusätzliche Maßnahme zur weiteren Leistungssteigerung getroffen. An den Permanentmagneten PM2 der magnetisierten Körper MK2 und MK3 ist jeweils auf der Seite, die dem von den Wälzkörpern WK durchquerten Raum zugewandt ist, ein Magnetfeldkonzentrator MKO aus einem weichmagnetischen Werkstoff mit hoher relativer magnetischer Permeabilität angebracht. Dieser Magnetfeldkonzentrator MKO hat die Aufgabe, das Magnetfeld in der Nähe des jeweiligen Wälzkörpers WK auf einen möglichst kleinen Raum zu konzentrieren.

Diese Änderung kann genutzt werden, um die magnetische Feldstärke in der unmittelbaren Umgebung des jeweiligen Wälzkörpers WK zu erhöhen, was wiederum den Wirkungsgrad der Energieerzeugung verbessern kann. Wenn das Magnetfeld in der Nähe des jeweiligen Wälzkörpers WK stärker ist, kann dies zu einer größeren Änderung des magnetischen Flusses führen, wenn sich dieser Wälzkörper WK bewegt. Dies würde wiederum zu einer höheren induzierten Spannung U_{ind} in der Induktionsspule IS2 führen, was den Wirkungsgrad der Energieerzeugung erhöhen würde.

Die sechste Ausführungsform zielt daher darauf ab, die Leistungsfähigkeit des Systems durch die Verwendung von Magnetfeldkonzentratoren MKO zu steigern. Diese Magnetfeldkonzentratoren MKO sollen das Magnetfeld näher an den Wälzkörpern WK fokussieren, um eine bessere Erfassung der Änderungen im magnetischen Fluss zu ermöglichen.

Insbesondere kann das vorgeschlagene System als innovativer Ansatz für den Betrieb und die Überwachung von Führungswagen in Profilschienenführungen zum Einsatz gelangen. Durch die Integration des vorgeschlagenen Systems ("Energy Harvesters") direkt in den Führungswagen können potenzielle Herausforderungen im Bereich der Stromversorgung und Verkabelung vermieden werden.

Der Hauptvorteil dieses Systems besteht darin, dass es den Führungswagen in die Lage versetzt, autark zu arbeiten. Die erzeugte Energie wird genutzt, um sowohl Sensorik - welche wichtige Daten wie Menge und/oder Zustand eines Schmierstoffs zur Schmierung der Wälzkörper, Feuchtigkeit und/oder Temperatur in der Umgebung der Wälzkörper erfasst - als auch eine kabellose Datenübertragungseinrichtung zu betreiben. Dies eliminiert die Notwendigkeit einer externen Stromversorgung, was in vielen industriellen Anwendungen von großem Vorteil sein kann, insbesondere in Bereichen, in denen eine Verkabelung problematisch oder teuer ist.

Insbesondere die geschaffene Möglichkeit der autarken Energieversorgung einer drahtlosen Datenübertragung ist ein wesentlicher Vorteil des vorgeschlagenen Systems. Obwohl WLAN und Bluetooth gängige Protokolle sind, ist es wichtig, jederzeit die Zuverlässigkeit und Sicherheit dieser Verbindungen in industriellen Umgebungen sicherzustellen, in denen möglicherweise Störungen oder andere Herausforderungen auftreten können.

Die Nutzung von Gleichrichtern GR und Energiespeichern ES gewährleistet, dass die erzeugte Energie effizient genutzt und gespeichert wird. Dies stellt sicher, dass die Sensorik und die Datenübertragungseinrichtung kontinuierlich mit der benötigten Energie versorgt werden.

Abschließend lässt sich sagen, dass die Kombination aus dem hier vorgeschlagenen System zur Energieerzeugung, Sensortechnologie und kabelloser Datenübertragung in einer Linearbewegungsvorrichtung (z.B. Profilschienenführung oder Kugelgewindetrieb) das Potential hat, die Art und Weise, wie Linearbewegungsvorrichtungen genutzt und überwacht werden, zu revolutionieren. Es bietet nicht nur eine autarke Energiequelle, sondern ermöglicht auch eine verbesserte Überwachung und Datenübertragung, die zur Optimierung des Betriebs und zur Früherkennung von Problemen beitragen kann.

## Patentansprüche

1. System zur Erzeugung elektrischer Energie in einer Linearbewegungsvorrichtung, welche Linearbewegungsvorrichtung (10) eine erste Vorrichtungskomponente (15) und eine zweite Vorrichtungskomponente (20) aufweist, wobei die zweite Vorrichtungskomponente (20) über Wälzkörper (WK) an der ersten Vorrichtungskomponente (10) gestützt ist, sodass die zweite Vorrichtungskomponente (20) relativ zur ersten Vorrichtungskomponente (15) linear bewegbar ist und sich die Wälzkörper (WK) im Betrieb der Linearbewegungsvorrichtung (10) bei einer Bewegung der zweiten Vorrichtungskomponente relativ zur ersten Vorrichtungskomponente relativ zur ersten Vorrichtungskomponente und zur zweiten Vorrichtungskomponente bewegen, wobei das System zur Erzeugung elektrischer Energie umfasst:
- die Wälzkörper (WK), die im Betrieb der Linearbewegungsvorrichtung entlang einer Bewegungsrichtung (BR) bewegbar sind;
- eine Einrichtung (PM, MK1, MK2, MK3) zur Erzeugung eines statischen Magnetfeldes in einem Raumbereich (RB), den die Wälzkörper (WK) im Betrieb der Linearbewegungsvorrichtung bei einer Bewegung entlang der Bewegungsrichtung (BR) nacheinander durchqueren müssen, wobei die Wälzkörper (WK) aus einem magnetisch permeablen Material bestehen, sodass die Wälzkörper (WK) geeignet sind, das Magnetfeld abhängig von der Position der Wälzkörper (WK) in dem einen Raumbereich (RB) zu beeinflussen; und
- mindestens eine Induktionsspule (IS, IS1, IS2) mit mindestens einer Spulenwindung, wobei die mindestens eine Induktionsspule (IS, IS1, IS2) relativ zu der Einrichtung (PM, MK1, MK2, MK3) zur Erzeugung eines statischen Magnetfeldes derart stationär angeordnet ist, dass sie aufgrund einer Änderung der Position der Wälzkörper (WK) bei einer Bewegung der Wälzkörper (WK) entlang der Bewegungsrichtung (BR) durch den einen Raumbereich (RB) eine Änderung eines magnetischen Flusses erfährt, die in der mindestens einen Spulenwindung eine elektrische Spannung (U_{ind}) induziert.

2. System nach Anspruch 1, wobei sich die Wälzkörper (WK) entlang eines geschlossenen Pfads umlaufend bewegen, oder wobei sich die Wälzkörper (WK) entlang eines festen Pfads bewegen und an einem Ende in ihre Ausgangsposition zurückkehren.

3. System nach Anspruch 1 oder 2, wobei die Wälzkörper (WK) als Kugeln oder Rollen ausgebildet sind.

4. System nach einem der vorhergehenden Ansprüche 1 bis 3, wobei die Einrichtung (PM, MK1, MK2, MK3) zur Erzeugung eines statischen Magnetfeldes durch einen Permanentmagneten (PM) aus hartmagnetischem Material gebildet ist.

5. System nach Anspruch 4, wobei der Permanentmagnet (PM) im Wesentlichen U-förmig ausgebildet ist, wobei seine beiden Enden unterschiedliche magnetische Polaritäten aufweisen, und wobei der Raum zwischen diesen beiden Enden von Magnetfeldlinien (FL) des statischen Magnetfeldes durchzogen und zur Durchquerung durch die Wälzkörper (WK) im Betrieb der Linearbewegungsvorrichtung (10) ausgebildet ist.

6. System nach einem der vorhergehenden Ansprüche 1 bis 3, wobei die Einrichtung zur Erzeugung eines statischen Magnetfeldes durch einen magnetisierten Körper (MK1) gebildet ist, umfassend:
- einen Permanentmagneten (PM1) aus hartmagnetischem Material mit gegenüberliegenden Enden unterschiedlicher magnetischer Polarität; und
- zwei Flussleitstücke (FLS1, FLS2), wobei ein erster Endabschnitt eines ersten Flussleitstücks (FLS1) mit einem Ende des Permanentmagneten (PM1) verbunden ist und ein erster Endabschnitt eines zweiten Flussleitstücks (FLS2) mit einem gegenüberliegenden Ende des Permanentmagneten (PM1) verbunden ist.

7. System nach Anspruch 6, wobei die zwei Flussleitstücke (FLS1, FLS2) aus einem weichmagnetischen Material mit hoher relativer magnetischer Permeabilität bestehen.

8. System nach Anspruch 6 oder 7, wobei der magnetisierte Körper (MK1) im Wesentlichen U-förmig ausgebildet ist, und wobei der Raum zwischen dem zweiten Ende des einen Flussleitstücks (FLS1) und dem zweiten Ende des anderen Flussleitstücks (FLS2) von Magnetfeldlinien (FL) des statischen Magnetfeldes durchzogen und zur Durchquerung durch die Wälzkörper (WK) im Betrieb der Linearbewegungsvorrichtung ausgebildet ist.

9. System nach Anspruch 8, wobei die Magnetfeldlinien (FL) im Bereich des Permanentmagneten (PM1), der zwei Flussleitstücke (FLS1, FLS2) und der Wälzkörper (WK) entlang geschlossener, im Wesentlichen ringförmiger Kurven verlaufen.

10. System nach Anspruch 8 oder 9, wobei die Flussleitstücke (FLS1, FLS2) so beschaffen und angeordnet sind, dass der räumliche Verlauf der Magnetfeldlinien (FL) sich mit der jeweiligen Position der Wälzkörper (WK) relativ zu den Flussleitstücken (FLS1, FLS2) ändert.

11. System nach einem der vorhergehenden Ansprüche 8 bis 10, wobei an dem der mindestens einen Induktionsspule (IS) benachbarten zweiten Ende mindestens eines der beiden Flussleitstücke (FLS1, FLS2) ein Polschuh (PS) aus weichmagnetischem Material angeordnet ist, um den räumlichen Verlauf der Magnetfeldlinien (FL) in der Umgebung der mindestens einen Induktionsspule (IS) zu optimieren.

12. System nach Anspruch 11, wobei eine Polschuhgeometrie und eine relative magnetische Permeabilität des Polschuhmaterials optimiert sind, um eine maximale Energieumwandlung von mechanischer Energie der Linearbewegungsvorrichtung in die erzeugte elektrische Energie zu gewährleisten.

13. System nach Anspruch 11 oder 12, wobei die Polschuhgeometrie in Abhängigkeit von der Geometrie der Wälzkörper (WK) und der Anordnung der mindestens einen Spulenwindung der Induktionsspule (IS) ausgebildet ist.

14. System nach einem der vorhergehenden Ansprüche 11 bis 13, wobei der Polschuh (PS) auf der der mindestens einen Induktionsspule (IS) zugewandten Seite eine konvex gekrümmte Oberfläche aufweist.

15. System nach einem der vorhergehenden Ansprüche 11 bis 14, wobei der Polschuh (PS) symmetrisch zu einer Mittelachse der Induktionsspule (IS) ausgebildet ist.

16. System nach einem der vorhergehenden Ansprüche 5 und 8 bis 15, wobei die Magnetfeldlinien (FL) im Wesentlichen senkrecht zur Bewegungsrichtung (BR) der Wälzkörper (WK) verlaufen.

17. System nach einem der vorhergehenden Ansprüche 1 bis 16, wobei die mindestens eine Induktionsspule (IS) in oder an dem einen Raumbereich (RB) angeordnet ist, welchen die Wälzkörper (WK) im Betrieb der Linearbewegungsvorrichtung bei einer Bewegung entlang der Bewegungsrichtung (BR) nacheinander durchqueren.

18. System nach einem der vorhergehenden Ansprüche 1 bis 17, wobei die mindestens eine Induktionsspule (IS) eine oder mehrere Spulenwindungen aufweist, welche sich ringförmig um eine Mittelachse der Induktionsspule (IS) erstrecken.

19. System nach Anspruch 18, wobei die eine oder mehreren Spulenwindungen der mindestens einen Induktionsspule (IS) jeweils einen Flächenbereich umschließen, der im Wesentlichen parallel zur Bewegungsrichtung (BR) der Wälzkörper (WK) ausgerichtet ist.

20. System nach einem der vorhergehenden Ansprüche 1 bis 3, wobei die Einrichtung zur Erzeugung eines statischen Magnetfeldes zwei U-förmige magnetisierte Körper (MK2, MK3) umfasst, die jeweils aus einem Permanentmagneten (PM2) und einem L-förmigen Flussleitstück (FLS3) bestehen, und die relativ zueinander beabstandet und spiegelsymmetrisch zur Bewegungsrichtung (BR) der Wälzkörper (WK) angeordnet sind, und wobei die Wälzkörper (WK) während des Betriebs der Linearbewegungsvorrichtung nacheinander den von Magnetfeldlinien (FL) des statischen Magnetfeldes durchzogenen Raumbereich (RB) zwischen den beiden magnetisierten Körpern (MK2, MK3) durchqueren.

21. System nach Anspruch 20, wobei die Erstreckung der magnetisierten Körper (MK2, MK3) in der Bewegungsrichtung (BR) etwa dem Durchmesser eines Wälzkörpers (WK) entspricht.

22. System nach Anspruch 20 oder 21, wobei, wenn ein Wälzkörper (WK) zwischen den Permanentmagneten (PM2) der beiden magnetisierten Körper (MK2, MK3) positioniert ist, ein nachfolgender oder vorangehender Wälzkörper (WK) zwischen den Enden der Flussleitstücke (FLS3) der beiden magnetisierten Körper (MK2, MK3) angeordnet ist.

23. System nach einem der vorhergehenden Ansprüche 20 bis 22, wobei die mindestens eine Induktionsspule (IS2) derart angeordnet ist, dass sich die mindestens eine Spulenwindung der mindestens einen Induktionsspule (IS2) ringförmig um den einen von den Wälzkörpern (WK) nacheinander durchquerten Raumbereich (RB) erstreckt.

24. System nach Anspruch 23, wobei die mindestens eine Induktionsspule (IS2) derart angeordnet ist, dass sich die mindestens eine Spulenwindung der mindestens einen Induktionsspule (IS2) jeweils durch einen Zwischenraum zwischen dem Permanentmagneten (PM2) und dem Flussleitstück (FLS3) des einen magnetisierten Körpers (MK2) und durch einen Zwischenraum zwischen dem Permanentmagneten (PM2) und dem Flussleitstück (FLS3) des anderen magnetisierten Körpers (MK3) erstreckt.

25. System nach einem der vorangehenden Ansprüche 1 bis 3, wobei die Einrichtung zur Erzeugung eines statischen Magnetfeldes zwei identisch ausgebildete magnetisierte Körper (MK2, MK3) mit einem E-förmigen Profil umfasst, die relativ zueinander beabstandet und spiegelsymmetrisch zur Bewegungsrichtung (BR) der Wälzkörper (WK) angeordnet sind, wobei das E-förmige Profil drei Schenkel aufweist und am mittleren Schenkel ein Permanentmagnet (PM2) angebracht ist, und wobei die Wälzkörper (WK) während des Betriebs der Linearbewegungsvorrichtung nacheinander den von Magnetfeldlinien (FL) des statischen Magnetfeldes durchzogenen Raumbereich (RB) zwischen den beiden magnetisierten Körpern (MK2, MK3) durchqueren.

26. System nach Anspruch 25, wobei zwei Induktionsspulen (IS1, IS2) in der Bewegungsrichtung (BR) der Wälzkörper (WK) gesehen hintereinander und auf gegenüberliegenden Seiten des Permanentmagneten (PM2) angeordnet sind, wobei sich die mindestens eine Spulenwindung der beiden Induktionsspulen jeweils ringförmig um den einen von den Wälzkörpern (WK) nacheinander durchquerten Raumbereich (RB) erstreckt.

27. System nach Anspruch 26, wobei die beiden Induktionsspulen (IS1, IS2) derart angeordnet sind, dass sie jeweils eine unterschiedliche Polarität des von den Wälzkörpern (WK) beeinflussten statischen Magnetfeldes erfassen.

28. System nach einem der vorhergehenden Ansprüche 20 bis 27, wobei die Magnetfeldlinien (FL) teilweise parallel zur Bewegungsrichtung (BR) der Wälzkörper (WK) verlaufen.

29. System nach einem der vorhergehenden Ansprüche 20 bis 28, wobei an dem Permanentmagneten (PM2) des einen magnetisierten Körpers (MK2) und/oder an dem Permanentmagneten (PM2) des anderen magnetisierten Körpers (MK3) ein Magnetfeldkonzentrator (MKO) aus einem weichmagnetischen Material mit großer relativer magnetischer Permeabilität angebracht ist, um das Magnetfeld auf möglichst kleinem Raum in der Nähe eines Wälzkörpers (WK) zu konzentrieren.

30. System nach einem der vorhergehenden Ansprüche 1 bis 29, ferner umfassend einen Gleichrichter (GR) zur Umwandlung der in der mindestens einen Induktionsspule (IS) induzierten Spannung (U_{ind}) in eine Gleichspannung.

31. System nach einem der vorhergehenden Ansprüche 1 bis 30, ferner umfassend einen Energiespeicher (ES) zur Speicherung und weiteren Verwendung der erzeugten elektrischen Energie, ausgewählt aus der Gruppe bestehend aus: Kondensator und Akkumulator.

32. System nach einem der vorhergehenden Ansprüche 1 bis 31, ausgebildet zur Versorgung von elektrischen Komponenten an der ersten Vorrichtungskomponente (15) oder der zweiten Vorrichtungskomponente (20) der Linearbewegungsvorrichtung (10) mittels der erzeugten elektrischen Energie.

33. System nach Anspruch 32, wobei die elektrischen Komponenten mindestens einen Sensor (S1, S2) umfassen.

34. System nach Anspruch 32 oder 33, wobei die elektrischen Komponenten mindestens eine drahtlose Kommunikationsschnittstelle (KS) zur Datenübertragung umfassen.

35. Linearbewegungsvorrichtung (10), mit einer ersten Vorrichtungskomponente (15) und einer zweiten Vorrichtungskomponente (20), wobei die zweite Vorrichtungskomponente (20) über Wälzkörper (WK) an der ersten Vorrichtungskomponente (15) gestützt ist, sodass die zweite Vorrichtungskomponente (20) relativ zur ersten Vorrichtungskomponente (15) linear bewegbar, mit mindestens einem System nach einem der vorhergehenden Ansprüche 1 bis 34, , wobei die Einrichtung zur Erzeugung eines statischen Magnetfelds und die mindestens eine Induktionsspule stationär zur ersten Vorrichtungskomponente oder stationär zur zweiten Vorrichtungskomponente angeordnet ist.

36. Linearbewegungsvorrichtung nach Anspruch 35, ausgebildet als Profilschienenführung (10) mit einer Führungsschiene als erste Vorrichtungskomponente (15) und einem Führungswagen oder -schlitten als zweite Vorrichtungskomponente (20).

37. Linearbewegungsvorrichtung nach Anspruch 35, ausgebildet als Kugelgewindetrieb mit einer Spindel als erste Vorrichtungskomponente und einer Spindelmutter als zweite Vorrichtungskomponente, wobei die Einrichtung zur Erzeugung eines statischen Magnetfelds stationär zur Spindelmutter angeordnet ist.

## Claims

1. A system for generating electrical energy in a linear motion device, which linear motion device (10) that has a first device component (15) and a second device component (20), wherein the second device component (20) is supported on the first device component (10) by means of rolling elements (WK) such that the second device component (20) is configured to be moveable linearly relative to the first device component (15) and the rolling elements (WK) move relative to the first device component and the second device component when the second device component carries out a movement relative to the first device component during the operation of the linear motion device (10), wherein the system for generating electrical energy comprises:
- the rolling elements (WK) that are configured to be moveable along a direction of movement (BR) during the operation of the linear motion device;
- an apparatus (PM, MK1, MK2, MK3) for generating a static magnetic field in a spatial region (RB), which the rolling elements (WK) have to successively traverse while moving along the direction of movement (BR) during the operation of the linear motion device, wherein the rolling elements (WK) consist of a magnetically permeable material such that the rolling elements (WK) are suitable for influencing the magnetic field in dependence on the position of the rolling elements (WK) in the one spatial region (RB); and
- at least one induction coil (IS, IS1, IS2) with at least one coil winding, wherein the at least one induction coil (IS, IS1, IS2) is arranged stationarily relative to the apparatus (PM, MK1, MK2, MK3) for generating a static magnetic field in such a way that, due to a change in the position of the rolling elements (WK) during a movement of the rolling elements (WK) through the one spatial region (RB) along the direction of movement (BR), the induction coil experiences a change of a magnetic flux, which induces an electric voltage (U_{ind}) in the at least one coil winding.

2. The system according to claim 1, wherein the rolling elements (WK) move along a closed path in a circulating manner or wherein the rolling elements (WK) move along a fixed path and return to their starting position at one end.

3. The system according to claim 1 or 2, wherein the rolling elements (WK) are realized in the form of balls or rollers.

4. The system according to one of preceding claims 1 to 3, wherein the apparatus (PM, MK1, MK2, MK3) for generating a static magnetic field is formed by a permanent magnet (PM) of hard magnetic material.

5. The system according to claim 4, wherein the permanent magnet (PM) essentially is realized in a U-shaped manner, wherein its two ends have different magnetic polarities, and wherein the space between these two ends is permeated by magnetic field lines (FL) of the static magnetic field and designed for being traversed by the rolling elements (WK) during the operation of the linear motion device (10).

6. The system according to one of preceding claims 1 to 3, wherein the apparatus for generating a static magnetic field is formed by a magnetized element (MK1) comprising:
- a permanent magnet (PM1) of hard magnetic material with opposite ends of different magnetic polarity; and
- two flux-conducting components (FLS1, FLS2), wherein a first end section of a first flux-conducting component (FLS1) is connected to one end of the permanent magnet (PM1) and a first end section of a second flux-conducting component (FLS2) is connected to an opposite end of the permanent magnet (PM1).

7. The system according to claim 6, wherein the two flux-conducting components (FLS1, FLS2) consist of a soft magnetic material with high relative magnetic permeability.

8. The system according to claim 6 or 7, wherein the magnetized element (MK1) essentially is realized in a U-shaped manner, and wherein the space between the second end of the one flux-conducting component (FLS1) and the second end of the other flux-conducting component (FLS2) is permeated by magnetic field lines (FL) of the static magnetic field and designed for being traversed by the rolling elements (WK) during the operation of the linear motion device.

9. The system according to claim 8, wherein the magnetic field lines (FL) extend along closed, essentially annular curves in the region of the permanent magnet (PM1), the two flux-conducting components (FLS1, FLS2) and the rolling elements (WK).

10. The system according to claim 8 or 9, wherein the flux-conducting components (FLS1, FLS2) are designed and arranged in such a way that the spatial progression of the magnetic field lines (FL) changes with the respective position of the rolling elements (WK) relative to the flux-conducting components (FLS1, FLS2).

11. The system according to one of preceding claims 8 to 10, wherein a pole shoe (PS) of soft magnetic material is arranged on the second end of at least one of the two flux-conducting components (FLS1, FLS2), which second end is located adjacent to the at least one induction coil (IS), in order to optimize the spatial progression of the magnetic field lines (FL) in the surroundings of the at least one induction coil (IS).

12. The system according to claim 11, wherein a pole shoe geometry and a relative magnetic permeability of the pole shoe material are optimized for ensuring a maximum energy conversion from the mechanical energy of the linear motion device into the generated electrical energy.

13. The system according to claim 11 or 12, wherein the pole shoe geometry is realized in dependence on the geometry of the rolling elements (WK) and the arrangement of the at least one winding of the induction coil (IS).

14. The system according to one of preceding claims 11 to 13, wherein the pole shoe (PS) has a convexly curved surface on the side facing the at least one induction coil (IS).

15. The system according to one of preceding claims 11 to 14, wherein the pole shoe (PS) is realized symmetrically to a central axis of the induction coil (IS).

16. The system according to one of preceding claims 5 and 8 to 15, wherein the magnetic field lines (FL) essentially extend perpendicular to the direction of movement (BR) of the rolling elements (WK).

17. The system according to one of preceding claims 1 to 16, wherein the at least one induction coil (IS) is arranged in or on the one spatial region (RB), which the rolling elements (WK) successively traverse in a movement along the direction of movement (BR) during operation of the linear motion device.

18. The system according to one of preceding claims 1 to 17, wherein the at least one induction coil (IS) has one or more coil windings that extend annularly around a central axis of the induction coil (IS).

19. The system according to claim 18, wherein the one or more coil windings of the at least one induction coil (IS) respectively enclose a surface area that is essentially aligned parallel to the direction of movement (BR) of the rolling elements (WK).

20. The system according to one of preceding claims 1 to 3, wherein the apparatus for generating a static magnetic field comprises two U-shaped magnetized elements (MK2, MK3), which respectively consist of a permanent magnet (PM2) and an L-shaped flux-conducting component (FLS3) and are arranged at a distance from each other and mirror-symmetrically with respect to the direction of movement (BR) of the rolling elements (WK), and wherein the rolling elements (WK) successively traverse the spatial region (RB) between the two magnetized elements (MK2, MK3), which is permeated by the magnetic field lines (FL) of the static magnetic field, during the operation of the linear motion device.

21. The system according to claim 20, wherein the extent of the magnetized elements (MK2, MK3) in the direction of movement (BR) approximately corresponds to the diameter of the rolling elements (WK).

22. The system according to claim 20 or 21, wherein a rolling element (WK), which follows or precedes a rolling element (WK) positioned between the permanent magnets (PM2) of the two magnetized elements (MK2, MK3), is arranged between the ends of the flux-conducting components (FLS3) of the two magnetized elements (MK2, MK3).

23. The system according to one of preceding claims 20 to 22, wherein the at least one induction coil (IS2) is arranged in such a way that the at least one coil winding of the at least one induction coil (IS2) extends annularly around the spatial region (RB), which the rolling elements (WK) successively traverse.

24. The system according to claim 23, wherein the at least one induction coil (IS2) is arranged in such a way that the at least one coil winding of the at least one induction coil (IS2) respectively extends through an intermediate space between the permanent magnet (PM2) and the flux-conducting component (FLS3) of the one magnetized element (MK2) and through an intermediate space between the permanent magnet (PM2) and the flux-conducting component (FLS3) of the other magnetized element (MK3).

25. The system according to one of preceding claims 1 to 3, wherein the apparatus for generating a static magnetic field comprises two identically designed magnetized elements (MK2, MK3) with an E-shaped profile, which are arranged at a distance from each other and mirror-symmetrically with respect to the direction of movement (BR) of the rolling elements (WK), wherein the E-shaped profile has three legs and a permanent magnet (PM2) is arranged on the central leg, and wherein, during operation of the linear motion device, the rolling elements (WK) successively traverse the spatial region (RB) between the two magnetized elements (MK2, MK3), which is permeated by magnetic field lines (FL) of the static magnetic field.

26. The system according to claim 25, wherein two induction coils (IS1, IS2) are arranged behind one another viewed in the direction of movement (BR) of the rolling elements (WK) and on opposite sides of the permanent magnet (PM2), and wherein the at least one coil winding of the two induction coils respectively extends annularly around the spatial region (RB), which the rolling elements (WK) successively traverse.

27. The system according to claim 26, wherein the two induction coils (IS1, IS2) are arranged in such a way that they respectively detect a different polarity of the static magnetic field influenced by the rolling elements (WK).

28. The system according to one of preceding claims 20 to 27, wherein the magnetic field lines (FL) partially extend parallel to the direction of movement (BR) of the rolling elements (WK).

29. The system according to one of preceding claims 20 to 28, wherein a magnetic field concentrator (MKO) of soft magnetic material with high relative magnetic permeability is arranged on the permanent magnet (PM2) of the one magnetized element (MK2) and/or on the permanent magnet (PM2) of the other magnetized element (MK3) in order to concentrate the magnetic field on the smallest space possible in the vicinity of a rolling element (WK).

30. The system according to one of preceding claims 1 to 29, furthermore comprising a rectifier (GR) for converting the voltage (U_{ind}) induced in the at least one induction coil (IS) into a direct voltage.

31. The system according to one of preceding claims 1 to 30, furthermore comprising an energy storage (ES) for the storage and further use of the generated electrical energy, wherein said energy storage is selected from the group comprising: capacitor and accumulator.

32. The system according to one of preceding claims 1 to 31, which is designed for supplying electrical components on the first device component (15) or the second device component (20) of the linear motion device (10) with the generated electrical energy.

33. The system according to claim 32, wherein the electrical components comprise at least one sensor (S1, S2).

34. The system according to claim 32 or 33, wherein the electrical components comprise at least one wireless communication interface (KS) for transmitting data.

35. A linear motion device (10) with a first device component (15) and a second device component (20), wherein the second device component (20) is supported on the first device component (15) by means of rolling elements (WK) such that the second device component (20) is configured to be moveable linearly relative to the first device component (15), with at least one system according to one of preceding claims 1 to 34, wherein the apparatus for generating a static magnetic field and the at least one induction coil are arranged stationarily to the first device component or stationarily to the second device component.

36. The linear motion device according to claim 35, which is realized in the form of a profiled rail guide (10) with a guide rail as the first device component (15) and a guide carriage or guide block as the second device component (20).

37. The linear motion device according to claim 35, which is realized in the form of a ball screw with a spindle as the first device component and a spindle nut as the second device component, wherein the apparatus for generating a static magnetic field is arranged stationarily to the spindle nut.

## Revendications

1. Système de production d'énergie électrique dans un dispositif à mouvement linéaire (10), lequel comporte un premier composant de dispositif (15) et un deuxième composant de dispositif (20), sachant que le deuxième composant de dispositif (20) est appuyé par le biais de corps de roulement (WK) au premier composant de dispositif (10) de telle manière que le deuxième composant de dispositif (20) peut être mobile de façon linéaire par rapport au premier composant de dispositif et les corps de roulements (WK) se déplacent pendant le fonctionnement du dispositif à mouvement linéaire (10) lors d'un mouvement du deuxième composant de dispositif par rapport au premier composant de dispositif par rapport au premier composant de dispositif et au deuxième composant de dispositif, sachant que le système de production d'énergie électrique comprend :
- les corps de roulement (WK), qui peuvent être mobiles pendant le fonctionnement du dispositif à mouvement linéaire le long d'une direction de déplacement (BR),
- un agencement (PM, MK1, MK2, MK3) pour la production d'un champ magnétique statique dans une zone d'espace (RB), que les corps de roulement (WK) doivent traverser les uns derrière les autres pendant le fonctionnement du dispositif à mouvement linéaire lors d'un déplacement le long de la direction de déplacement (BR), sachant que les corps de roulement (WK) sont composés d'un matériau magnétiquement perméable de telle manière que les corps de roulement (WK) sont appropriés pour influencer le champ magnétique en fonction de la position des corps de roulement (WK) dans une zone d'espace (RB), et
- au moins une bobine d'induction (IS, IS1, IS2) avec au moins une spire de bobine, sachant qu'au moins une bobine d'induction (IS, IS1, IS2) est disposée de façon fixe par rapport à l'agencement (PM, MK1, MK2, MK3) pour la production d'un champ magnétique statique de telle manière qu'elle subit une modification d'un flux magnétique en raison d'une variation de la position des corps de roulement (WK) lors d'un déplacement des corps de roulement (WK) le long de la direction de déplacement (BR) à travers une zone d'espace (RB), qui induit une tension électrique (U_{ind}) dans au moins une spire de bobine.

2. Système selon la revendication 1, sachant que les corps de roulements (MK) se déplacent circulant le long d'un chemin fermé, ou sachant que les corps de roulement (WK) se déplacent le long d'un chemin fixe et reviennent à une extrémité dans leur position initiale.

3. Système selon la revendication 1 ou 2, sachant que les corps de roulement (WK) sont constitués sous la forme de billes ou de rouleaux.

4. Système selon l'une quelconque des revendications précédentes 1 à 3, sachant que l'agencement (PM, MK1, MK2, MK3) pour la production d'un champ magnétique statique est formé par un aimant permanent (PM) en matériau magnétique dur.

5. Système selon la revendication 4, sachant que l'aimant permanent (PM) est constitué pour l'essentiel en forme de U, sachant que ses deux extrémités comportent des polarités magnétiques différentes, et sachant que l'espace entre ces deux extrémités est traversé par des lignes de champ magnétique (FL) du champ magnétique statique et est constitué par la traversée par les corps de roulement (WK) pendant le fonctionnement du dispositif à mouvement linéaire (10).

6. Système selon l'une quelconque des revendications précédentes 1 à 3, sachant que l'agencement pour la production d'un champ magnétique statique est formé par un corps magnétisé (MK1), comprenant :
- un aimant permanant (PM1) dans un matériau magnétique dur avec des extrémités opposées à polarité magnétique différente, et
- deux éléments conducteurs de flux (FLS1, FLS2), sachant qu'une première section finale d'un premier élément conducteur de flux (FLS1) est reliée à une extrémité de l'aimant permanent (PM1) et une première section finale d'un deuxième élément conducteur de flux (FLS2) est reliée à une extrémité opposée de l'aimant permanent (PM1).

7. Système selon la revendication 6, sachant que les deux éléments conducteurs de flux (FLS1, FLS2) sont composés d'un matériau magnétique doux à perméabilité magnétique relative élevée.

8. Système selon la revendication 6 ou 7, sachant que le corps magnétisé (MK1) est constitué pour l'essentiel en forme de U et sachant que l'espace entre la deuxième extrémité d'un élément conducteur de flux (FLS1) et la deuxième extrémité de l'autre élément conducteur de flux (FLS2) est traversé par des lignes de champ magnétique (FL) du champ magnétique statique et est constitué pour la traversée par les corps de roulement (WK) pendant le fonctionnement du dispositif à mouvement linéaire.

9. Système selon la revendication 8, sachant que les lignes de champ magnétique (FL) dans la zone de l'aimant permanent (PM1), des deux éléments conducteurs de flux (FLS1, FLS2) et des corps de roulement (WK) passent le long de courbes fermées, pour l'essentiel de forme annulaire.

10. Système selon la revendication 8 ou 9, sachant que les éléments conducteurs de flux (FLS1, FLS2) sont conçus et disposés de sorte que le profil spatial des lignes de champ magnétique (FL) se modifie avec la position respective des corps de roulement (WK) par rapport aux éléments conducteurs de flux (FLS1, FLS2).

11. Système selon l'une quelconque des revendications précédentes 8 à 10, sachant que sur la deuxième extrémité d'au moins un des deux éléments conducteurs de flux (FLS1, FLS2), voisine d'au moins une bobine d'induction (IS), est disposée une pièce polaire (PS) dans un matériau magnétique doux pour optimiser le profil spatial des lignes de champ magnétique (FL) dans l'environnement d'au moins une bobine d'induction (IS).

12. Système selon la revendication 11, sachant qu'une géométrie de pièce polaire et une perméabilité magnétique relative du matériau de pièce polaire sont optimisées pour garantir une conversion énergétique maximale de l'énergie mécanique du dispositif à mouvement linéaire en énergie électrique produite.

13. Système selon la revendication 11 ou 12, sachant que la géométrie de pièce polaire est constituée en fonction de la géométrie des corps de roulement (WK) et du montage d'au moins une spire de bobine de la bobine d'induction (IS).

14. Système selon l'une quelconque des revendications précédentes 11 à 13, sachant que la pièce polaire (PS) comporte une surface courbée de façon convexe sur le côté tourné vers au moins une bobine d'induction (IS).

15. Système selon l'une quelconque des revendications précédentes 11 à 14, sachant que la pièce polaire (PS) est constituée de façon symétrique par rapport à un axe médian de la bobine d'induction (IS).

16. Système selon l'une quelconque des revendications précédentes 5 et 8 à 15, sachant que les lignes de champ magnétique (FL) passent pour l'essentiel perpendiculairement à la direction de déplacement (BR) des corps de roulement (WK).

17. Système selon l'une quelconque des revendications précédentes 1 à 16, sachant qu'au moins une bobine d'induction (IS) est disposée dans ou sur la zone d'espace (RB), que les corps de roulement (WK) traversent les uns derrière les autres pendant le fonctionnement du dispositif à mouvement linéaire lors d'un déplacement le long de la direction de déplacement (BR).

18. Système selon l'une quelconque des revendications précédentes 1 à 17, sachant qu'au moins une bobine d'induction (IS) comporte une ou plusieurs spires de bobine, lesquelles s'étendent en forme annulaire autour d'un axe médian de la bobine d'induction (IS).

19. Système selon la revendication 18, sachant qu'une ou plusieurs spires de bobine d'au moins une bobine d'induction (IS) entourent respectivement une zone de surface, qui est orientée pour l'essentiel parallèlement à la direction de déplacement (BR) des corps de roulement (WK).

20. Système selon l'une quelconque des revendications précédentes 1 à 3, sachant que l'agencement de production d'un champ magnétique statique comprend deux corps magnétisés en forme de U (MK2, MK3), qui sont respectivement composés d'un aimant permanent (PM2) et d'un élément conducteur de flux en forme de L (FLS3) et qui sont disposés à distance l'un de l'autre et en symétrie spéculaire par rapport à la direction de déplacement (BR) des corps de roulement (WK) et sachant que les corps de roulement (WK) traversent pendant le fonctionnement du dispositif à mouvement linéaire les uns derrière les autres la zone d'espace (RB) traversée par les lignes de champ magnétique (FL) du champ magnétique statique entre les deux corps magnétisés (MK2, MK3).

21. Système selon la revendication 20, sachant que l'extension des corps magnétisés (MK2, MK3) correspond dans la direction de déplacement (BR) à peu près au diamètre d'un corps de roulement (WK).

22. Système selon la revendication 20 ou 21, sachant que, lorsqu'un corps de roulement (WK) est positionné entre l'aimant permanent (PM2) des deux corps magnétisés (MK2, MK3), un corps de roulement (WK) suivant ou précédent est disposé entre les extrémités des éléments conducteurs de flux (FLS3) des deux corps magnétisés (MK2, MK3).

23. Système selon l'une quelconque des revendications précédentes 20 à 22, sachant qu'au moins une spire de bobine d'au moins une bobine d'induction (IS2) est disposée de telle manière qu'au moins une spire de bobine d'au moins une bobine d'induction (IS2) s'étend en forme annulaire autour d'une zone d'espace (RB) traversée par les corps de roulement (WK) les uns derrière les autres.

24. Système selon la revendication 23, sachant qu'au moins une bobine d'induction (IS2) est disposée de telle manière qu'au moins une spire de bobine d'au moins une bobine d'induction (IS2) s'étend respectivement à travers un espace intermédiaire entre l'aimant permanent (PM2) et l'élément conducteur de flux (FLS3) d'un corps magnétisé (MK2) et à travers un espace intermédiaire entre l'aimant permanent (PM2) et l'élément conducteur de flux (FLS3) de l'autre corps magnétisé (MK3).

25. Système selon l'une quelconque des revendications précédentes 1 à 3, sachant que l'agencement de production d'un champ magnétique statique comprend deux corps magnétisés (MK2, MK3) constitués de façon identique avec un profil en forme de E, qui sont disposés à distance l'un par rapport à l'autre et en symétrie spéculaire par rapport à la direction de déplacement (BR) des corps de roulement (WK), sachant que le profil en forme de E comporte trois branches et un aimant permanent (PM2) est placé sur la branche centrale et sachant que les corps de roulement (WK) traversent les uns derrière les autres la zone d'espace (RB) entre les deux corps magnétisés (MK2, MK3), traversée par les lignes de champ magnétique (FL) du champ magnétique statique pendant le fonctionnement du dispositif à mouvement linéaire.

26. Système selon la revendication 25, sachant que deux bobines d'induction (S1, S2) sont disposées dans la direction de déplacement (BR) des corps de roulement (WK) vus les uns derrière les autres et sur les côtés opposés de l'aimant permanent (PM2), sachant qu'au moins une spire de bobine des deux bobines d'induction s'étend respectivement en forme annulaire autour d'une zone d'espace (RB) traversée par les corps de roulement (WK) les uns derrière les autres.

27. Système selon la revendication 26, sachant que les deux bobines d'induction (S1, S2) sont disposées de telle manière qu'elles saisissent respectivement une polarité différente du champ magnétique statique influencée par les corps de roulement (WK).

28. Système selon l'une quelconque des revendications précédentes 20 à 27, sachant que les lignes de champ magnétique (FL) passent en partie parallèlement à la direction de déplacement (BR) des corps de roulement (WK).

29. Système selon l'une quelconque des revendications précédentes 20 à 28, sachant que sur l'aimant permanent (PM2) du corps magnétisé (MK2) et/ou sur l'aimant permanent (PM2) de l'autre corps magnétisé (MK3) est placé un concentrateur de champ magnétique (MKO) dans un matériau magnétique doux avec une perméabilité magnétique relative élevée pour concentrer le champ magnétique sur l'espace le plus petit possible à proximité d'un corps de roulement (WK).

30. Système selon l'une quelconque des revendications précédentes 1 à 29, comprenant en plus un redresseur (GR) pour la conversion de la tension induite (U_{ind}) dans au moins une bobine d'induction (IS) en une tension continue.

31. Système selon l'une quelconque des revendications précédentes 1 à 30, comprenant en plus un accumulateur d'énergie (ES) pour l'accumulation et l'utilisation ultérieure de l'énergie électrique produite, sélectionné à partir du groupe composé de : condensateur et accumulateur.

32. Système selon l'une quelconque des revendications précédentes 1 à 31, constitué pour l'alimentation de composants électriques sur le premier composant de dispositif (15) ou le deuxième composant de dispositif (20) du dispositif à mouvement linéaire (10) au moyen de l'énergie électrique produite.

33. Système selon la revendication 32, sachant que les composants électriques comprennent au moins un capteur (S1, S2).

34. Système selon la revendication 32 ou 33, sachant que les composants électriques comprennent au moins une interface de communication sans fil (KS) pour la transmission de données.

35. Dispositif à mouvement linéaire (10), avec un premier composant de dispositif (15) et un deuxième composant de dispositif (20), sachant que le deuxième composant de dispositif (20) est appuyé par le biais de corps de roulement (WK) au premier composant de dispositif (15) de telle manière que le deuxième composant de dispositif (20) peut être mobile de façon linéaire par rapport au premier composant de dispositif (15), avec au moins un système selon l'une quelconque des revendications précédentes 1 à 34, sachant que l'agencement de production d'un champ magnétique statique et au moins une bobine d'induction sont disposés de façon fixe par rapport au premier composant de dispositif ou de façon fixe par rapport au deuxième composant de dispositif.

36. Dispositif à mouvement linéaire selon la revendication 35, constitué sous la forme d'un guidage à rail profilé (10) avec un rail de guidage en tant que premier composant de dispositif (15) et un coulisseau ou chariot de guidage en tant que deuxième composant de dispositif (20).

37. Dispositif à mouvement linéaire selon la revendication 35, constitué sous la forme d'une vis d'entraînement à billes avec une broche en tant que premier composant de dispositif et un écrou de broche en tant que deuxième composant de dispositif, sachant que l'agencement de production d'un champ magnétique statique est disposé de façon fixe par rapport à l'écrou de broche.
